# EUROPÄISCHE PATENTSCHRIFT

(11) **EP 3 261 320 B1**
(45) Veröffentlichungstag und Bekanntmachung des Hinweises auf die Patenterteilung: **25.03.2020**
(21) Anmeldenummer: 16020248.7
(22) Anmeldetag: 24.06.2016
(51) Int. Cl.: H04L 29/08

(54) **SYSTEM UND VERFAHREN ZUR KOMMUNIKATION UNTER EINBEZIEHUNG EINER DIGITALEN AURA EINES NUTZERS**
SYSTEM AND METHOD FOR COMMUNICATION WITH THE INVOLVEMENT OF A DIGITAL AURA OF A USER
SYSTEME ET PROCEDE DE COMMUNICATION PRENANT EN COMPTE UNE AURA NUMERIQUE D'UN UTILISATEUR

(43) Veröffentlichungstag der Anmeldung: 27.12.2017
(73) Patentinhaber: Deutsche Telekom AG, 53113 Bonn (DE)
(72) Erfinder: HILLMANN, Uwe, 10247 Berlin (DE); BRANDT, Thoralf, 14612 Falkensee (DE); DRÜSEDOW, Steffen, 16727 Oberkrämer (DE); SCHNEIDER, Lutz, 13509 Berlin (DE); REINIG, Anton, 10437 Berlin (DE)
(74) Vertreter: Raible Deissler Lehmann Patentanwälte PartG mbB

(56) Entgegenhaltungen:
- US-B1- 8 988 215
- US-B2- 9 100 783

## Beschreibung

Die vorliegende Erfindung betrifft ein System und ein Verfahren zum Übertragen von Daten von einem ersten Nutzer zu mindestens einem zweiten Nutzer, wobei die Daten von digitalen Einheiten, die von dem ersten Nutzer in dessen unmittelbarer Umgebung genutzt werden, generiert werden.

Menschen kommunizieren synchron und asynchron klassisch über Telefonie, sogenanntes Messaging (Nachrichtenübermittlung) und sogenanntes Sharing (Erfahrungsaustausch). Jeder Mensch verfügt zunehmend über eine sogenannte "digitale Aura", das heißt, er ist umgeben von digitalen Einheiten, im Folgenden auch digitale Artefakte genannt, die im täglichen Leben durch den Nutzer genutzt werden. Diese digitalen Einheiten bzw. Artefakte können sowohl dem Nutzer persönlich gehören als auch von Dritten bereitgestellt werden. Durch diese Artefakte werden Daten über Kontexte und Aktivitäten eines jeweiligen Nutzers generiert. Die Kontexte, über welche Daten generiert werden, können sowohl reale Kontexte als auch virtuelle Kontexte sein. Bei realen Kontexten kann es sich bspw. um Aktivitäten wie Radfahren, Arbeiten oder Musik hören handeln. Bei virtuellen Kontexten kann es sich bspw. um eine Nutzung einer VR-Brille ("Virtual Reality"-Brille), um Videos anzuschauen etc. handeln. Ein erster Nutzer kann nun zur Kommunikation mit mindestens einem zweiten Nutzer die von diesen Kontexten generierten Daten verwenden, um diese dem mindestens einen zweiten Nutzer mitzuteilen, wie er dies klassisch in einem Telefonat oder in einer MessengerApp-Nachricht tut. Die digitalen Einheiten bzw. Artefakte erzeugen verschiedene Daten, die der Nutzer an andere Nutzer übermitteln kann. Daraus können komplexe Kontextbeschreibungen des sendenden Nutzers entstehen, aus denen der empfangende Nutzer Aussagen über einen aktuellen Kontext ableiten kann, in dem sich der sendende Nutzer befindet. Dabei kann es sinnvoll sein bzw. wünschenswert sein, dass ein jeweiliger erster Nutzer bzw. sendender Nutzer für die Kommunikation seine Daten nicht nur an einen zweiten bzw. empfangenden Nutzer, sondern ggf. auch an eine Gruppe empfangender Nutzer senden möchte.

Um derartige Daten auszutauschen, werden derzeit von jeweiligen Nutzern sogenannte Messaging Apps genutzt, um mit anderen Nutzern zu kommunizieren. Diese Kommunikation beinhaltet keine automatisiert geteilten Kontextinformationen. Wenn ein Nutzer B Informationen über einen Nutzer A oder dessen Umfeld erhalten möchte, muss sich Nutzer B diese Information über andere Wege, bspw. über eine telefonische Rückfrage oder über Textnachrichten oder Apps, wie bspw. Wetterinfo, beschaffen. Wenn Nutzer B und Nutzer A Kontextdaten austauschen wollen, war es bislang notwendig, dass beide Nutzer eine gleiche dafür anwendbare App installiert haben, um diese speziellen Kontextdaten bspw. innerhalb einer Community austauschen zu können. Bekannt sind bspw. eine Spotify-Community, Runtastic-Community etc.

Aus der US 2015/334140 A1 ist eine Anzeige einer Verfügbarkeit eines anderen Nutzers und ein anschließender Verbindungsaufbau bekannt.

Aus der US 8,212,650 B2 ist ein selbstkonfigurierendes Kommunikationsgerät bekannt, das auf Kontextinformationen basiert.

In der US 8,495,503 B2 werden Kontextinformationen bspw. zu einer farblichen Darstellung genutzt, mit welcher zu beschreiben ist, mit welcher Antwortzeit zu rechnen ist.

Aus der US 2007/0214238 ist ein Community-Kontext-Manager bekannt.

Die US 9,077,799 B2 beschreibt ein Verfahren zur Vereinfachung einer Kontextbereitstellung während einer Kommunikationseinheit.

Die US 8,988,215 B1 beschreibt Techniken zum Bereitstellen der Steuerung eines Überwachungssystems, z. B. eines Time-Alarms oder eines Sicherheitssystems, unter Verwendung eines oder mehrerer mobiler Geräte. In einigen Implementierungen ermöglicht eine native Anwendung für Mobilgeräte die Verwendung eines mobilen Geräts als Sicherheits-Automatisierungssystem-Tastatur und Controller für ein Heimsicherheitssystem. In dieser Implementierung überprüft das Mobilgerät unter Verwendung der nativen Mobilgeräteanwendung den Echtzeitstatus des System und der Sensoren.

In der US 9,100,783 B2 wird beschrieben, wie zwei Freunde drahtlose Kommunikationsgeräte koppeln können, die anschließend Positionsinformationen Peer-to-Peer oder über einen Cloud-Server austauschen. Dabei zeigt jedes Gerät eine Karte mit dem Standort des gekoppelten Geräts. Dem Gerät können Anweisungen gegeben werden, wie der aktuelle Standort des anderen Geräts erreichbar ist.

Vor dem Hintergrund des Standes der Technik war es nun wünschenswert, eine Möglichkeit vorzusehen, dass ein erster Nutzer mindestens einem zweiten Nutzer Kontextdaten übermitteln kann, ohne dass er selbst zum Zeitpunkt der Übertragung diese Übertragung aktiv selbst initiieren muss und zudem unabhängig davon, ob der erste und der mindestens eine zweite Nutzer zur Übertragung der Kontextdaten entsprechende Applikationen auf ihren jeweiligen Endgeräten installiert haben.

Zur Lösung dieser Aufgabe wird ein System und ein Verfahren mit den Merkmalen der unabhängigen Patentansprüche bereitgestellt. Ausgestaltungen des Systems und des Verfahrens werden in der Beschreibung und den entsprechend abhängigen Patentansprüchen angegeben.

Erfindungsgemäß wird ein System zum Übertragen von Daten von einem ersten Nutzer zu mindestens einem zweiten Nutzer bereitgestellt, wobei die Daten von digitalen Einheiten, die von dem ersten sendenden Nutzer in dessen unmittelbarer Umgebung genutzt werden, generiert werden, und wobei das System dazu konfiguriert ist, die so generierten Daten regelbasiert automatisch zu sammeln, zu bündeln und über mindestens einen kontextbasierten Kommunikationskanal an den mindestens einen zweiten, d. h. den mindestens einen empfangenden Nutzer zu übertragen.

Das erfindungsgemäße System, im Folgenden kurz auch "AURA" genannt, ermöglicht es, dass ein erster Nutzer, d. h. ein sendender Nutzer, Kontextdaten, die eine digitale Einheit, wie bspw. eine bestimmte App, erzeugt hat, einem zweiten Nutzer zukommen lassen kann, unabhängig davon, ob der zweite Nutzer die die entsprechenden Kontextdaten erzeugende App ebenfalls auf einem ihm zugeordneten Endgerät installiert hat. Zum Beispiel ist es denkbar, dass ein Nutzer A, eine Musik-App, eine Videowiedergabe-App und/oder eine Fitness-App auf einem ihm zugeordneten Endgerät installiert hat, welche durch deren Nutzung jeweils Kontextdaten erzeugen. Auch wenn ein zweiter Nutzer, wie bspw. Nutzer B, weder eine entsprechende Musik-App noch eine Videowiedergabe-App noch eine Fitness-App auf dem ihm zugeordneten Endgerät installiert hat, kann Nutzer B mithilfe des erfindungsgemäßen Systems automatisiert die Kontextdaten von Nutzer A erhalten. Ferner hat Nutzer B zusätzlich Zugriff auf konkrete Informationen, wie bspw. welcher Musiktitel von Nutzer A gehört wird, und kann den gleichen Musiktitel ebenfalls sofort hören bzw. welcher Film geschaut wird und kann unmittelbar den gleichen Film schauen und/oder wie intensiv, wo und welchen Sport Nutzer A gerade treibt.

Alle digitalen Einheiten bzw. Artefakte, die ein Nutzer zur Tages- und/oder Nachtzeit in seinem unmittelbaren realen und virtuellen Umfeld nutzt, werden im Folgenden auch als "digitale Aura" des jeweiligen Nutzers bezeichnet. Dabei kann es sich um Sensoren und/oder Aktoren, die auf technischen Geräten installiert sind, handeln. Sensoren und/oder Aktoren sind in diesem Falle technische Geräte, wie bspw. Temperatursensoren, Beschleunigungssensoren etc., digitale Anwendungen und Services, wie bspw. sogenannte Apps. Im virtuellen Umfeld, bspw. in einer virtuellen Welt wie Second Life oder ähnliches, sind die Sensoren bzw. Aktoren virtuelle Sensoren, wie bspw. Proximity-Sensoren, Services, wie bspw. Videoplattformen für VR und Anwendungen, wie bspw. Spiele bzw. Games. Virtuelle Aktoren sind dabei Objekte und Services, die in einer virtuellen Realität Änderungen mit realen und virtuellen Kontexten entsprechender Kommunikationspartner anzeigen.

Eine digitale Aura des ersten Nutzers wird demnach definiert und erzeugt von Sensoren und anderen digitalen Quellen, d. h. Quellen für Kontextdaten, die sich in unmittelbarer Umgebung des ersten Nutzers befinden. Als Quellen für Kontextinformationen können dabei alle Arten von digitalen Sensoren und Systemen sowie Nutzungsdaten von Software-Applikationen dienen. Als Aktoren kommen dabei bspw. alle Arten von bildschirmbasierten Systemen, wie bspw. PCs, mobile Endgeräte, Displays, Digitalwatches, TVs etc. in Frage. Ferner können alle Arten von Objekten des "Internet der Dinge", die Änderungen eines Kontextstatus durch visuell, auditiv und sensitiv wahrnehmbare Änderungen am Objekt dem Nutzer mitteilen können, als Aktoren in Frage kommen.

Jeweilige Kontexte des ersten Nutzers werden bspw. definiert durch einen Kontext wie bspw. "Kommunikation", einen Kontext wie bspw. "Aktivitäten", einen Kontext wie bspw. "Orte" und einen Kontext wie bspw. "Services". Für jeden dieser so definierten Kontexte werden durch die jeweiligen Sensoren und/oder Aktoren Daten, d. h. jeweilige Kontextdaten, generiert, welche bspw. im Interesse des ersten Nutzers an mindestens einen zweiten Nutzer übertragen werden. Auf Seiten des zweiten Nutzers ist es letztlich notwendig, um die Kontextdaten von dem ersten Nutzer empfangen zu können, entsprechende Aktoren vorzusehen, die eine Anzeige der Kontextdaten des ersten Nutzers ermöglichen. Dabei kann es sich bspw. um Displays und/oder das Internet der Dinge als digitale Aktoren handeln.

Während traditionelle Kommunikationswege, wie die bereits genannte Telefonie, das Messaging und Sharing von Medien, ein aktives Initiieren einer Kommunikation durch einen Nutzer erfordern, ist ein solches aktives Initiieren einer Kommunikation durch einen Nutzer bei Nutzung des erfindungsgemäßen Systems nicht erforderlich. Bei einer synchronen Kommunikation, wie Telefonie und Live-Chat müssen ferner beide Kommunikationspartner die volle Aufmerksamkeit auf die gerade geführte Kommunikation legen. Das ist oft sehr zeitaufwändig und wird durch den Nutzer mit zunehmenden Aktivitäten schon im Vorfeld der eigentlichen Kommunikation als mentale Belastung, wie bspw. als gewisser Erwartungsdruck, wahrgenommen.

Das erfindungsgemäße System, wie voranstehend bereits erwähnt kurz auch AURA genannt, bietet den Nutzern nunmehr eine neue Form einer synchronen Kommunikation. Bei AURA handelt es sich um ein kontaktbasiertes und nichtintrusives Kommunikationssystem unter Einbeziehung der digitalen Aura der jeweiligen Nutzer. Als unsichtbarer Agent sammelt das erfindungsgemäße System, d. h. AURA, regelbasiert an sich einzeln existierende Daten, die von Einheiten bzw. Artefakten im unmittelbaren Umfeld eines jeweiligen Nutzers, hier des ersten Nutzers, erzeugt werden und bündelt diese so generierten Daten, die der erste Nutzer durch die Nutzung digitaler Artefakte in seinem unmittelbaren Umfeld erzeugt. Diese Daten werden in der Regel in Realzeit ausgetauscht. Denkbar ist es auch, dass diese Daten darüber hinaus ergänzend oder alternativ aufgezeichnet und als Kontext-Historie abgespeichert werden. Eine solche Kontext-Historie kann zum einen für persönliche Zwecke, wie bspw. ein Tagebuch, oder für Geschäftszwecke, wie bspw. eine Datenanalyse bzw. - auswertung, genutzt werden oder aber einfach auch zu einem späteren Zeitpunkt an mindestens einen zweiten Nutzer übertragen werden. Im Falle der Übermittlung der Kontextdaten in Realzeit handelt es sich dabei ebenfalls dann um eine Art der synchronen Kommunikation, wobei diese dann jedoch durch den ersten Nutzer nicht explizit von Fall zu Fall initiiert werden muss, sondern auf Basis von einmal eingestellten Präferenzen, d. h. regelbasiert, vollständig automatisiert erfolgt. Das bedeutet, dass der erste Nutzer im Vorfeld, d. h. bei einer Start- und Initialisierungsphase des erfindungsgemäßen Systems, definiert, wie er Kontextdaten, die durch Nutzung digitaler Einheiten in seinem unmittelbaren Umfeld erzeugt werden, einem zweiten Nutzer oder einer Nutzergruppe übertragen möchte. Der mindestens eine zweite Nutzer hat dann die Möglichkeit, bedürfnisorientiert und/oder zu einer passenden Zeit zu schauen, was der erste Nutzer gerade tut. Dabei kann der mindestens eine zweite Nutzer eine Aktivität des ersten Nutzers in abstrahierter Form sehen und auf Wunsch mehr Details von dem ersten Nutzer anfordern, die dann auf Basis der Voreinstellung des ersten Nutzers automatisiert geliefert werden. Zusätzlich hat der mindestens eine zweite Nutzer die Möglichkeit, sich über einen zukünftigen Kontextwechsel informieren zu lassen, indem er bspw. einen sogenannten Marker setzt. Ein derartiger Marker ist zeitlich unbestimmt und wird dann ausgelöst, sobald sich ein aktueller Kontext des ersten Nutzers ändert. Als Beispiel sei genannt: "der mindestens eine zweite Nutzer sieht, dass der erste Nutzer im Flugzeug sitzt und möchte gerne informiert werden, sobald der Kontext bei dem ersten Nutzer von "Flugzeug" zu "Autofahren" wechselt, um einen Telefonanruf zu initiieren".

Weiterhin besteht die Möglichkeit, definierte Kontexte zu markieren und sobald diese künftig eintreten, automatisiert zu teilen oder zu abonnieren.

Derzeit werden Status-Informationen als quantitative Aussagen in Apps ausgegeben, wie bspw. ein Batterie-Status, eine Herzfrequenz, eine Schrittzahl oder eine Temperatur. Das heißt, dass diese Statusinformationen nicht miteinander kombiniert und nicht als eigenständiger Kommunikationskanal genutzt werden. In dem erfindungsgemäßen System ist es nunmehr möglich, derart generierte Daten in einem Kontext zu bündeln, d. h. zu kombinieren, und daraus Aussagen über den jeweiligen Kontext abzuleiten, in dem sich der jeweilige Nutzer gerade befindet. Die aus einer Kombination der Daten abgeleiteten Aussagen werden über den mindestens einen kontextbasierten Kommunikationskanal an den mindestens einen zweiten Nutzer übertragen. Diese Aussagen können dabei sowohl parallel dargestellt werden als auch in Kombination zur Ableitung eigenständiger Kontextaussagen führen. Eine eigenständige Kontextaussage bedeutet dabei, dass die Aussagen, die durch Kombination der zunächst generierten Daten abgeleitet werden, weiter zu einer weiteren Kontextaussage interpretiert werden. Beispielsweise ist es möglich, aus den parallel generierten Aussagen "Mittel zur Fortbewegung" und "Geschwindigkeit" und "Musik" und "Herzfrequenz" und "Landkarte" und "Wetter" zu einer Interpretation zu kommen, dass "Nutzer A das Ziel voraussichtlich entspannt und gut gelaunt in ca. 12 Minuten mit dem Motorrad erreichen wird".

Aktuell können Nutzer Einstellungen in sogenannten Apps nur aufwändig vornehmen. Ein jeweiliger Nutzer muss Einzeleinstellungen oder Gruppen von Einstellungen manuell aktivieren bzw. deaktivieren. Mithilfe einer Ausgestaltung des erfindungsgemäßen Systems wird ein jeweiliger Nutzer in die Lage versetzt, komplexe Einstellungen über einen einfachen Mechanismus analog zu einer Lautstärken-Regelung zu steuern. Wird der dafür vorgesehene Regler auf ein Maximum geregelt, wird eine maximale Anzahl an Kontexten übertragen. Wird der Regler auf ein Minimum geregelt, werden keine Kontextdaten mehr geteilt. Befindet sich der Regler dazwischen, werden entsprechende Zwischenstufen an Kontextdaten übermittelt. Eine Priorisierung der Kontextdaten erfolgt auf Basis manueller Einstellungen eines jeweiligen Nutzers und auf Basis von ggf. vorgegebenen Vorschlägen des Systems, die bspw. auf vorangegangen erhobenen Nutzungsdaten basieren.

Das erfindungsgemäße System ist dazu geeignet, von verschiedensten digitalen Einheiten, die den jeweiligen Nutzer bspw. in seinem täglichen Leben umgeben und von dem Nutzer genutzt werden, Daten über Kontexte und Aktivitäten des jeweiligen Nutzers zu generieren. Diese so generierten Daten aus unterschiedlichen Ökosystemen, d. h. Betriebssystemen, Services und Objekten, können dazu verwendet werden, um sie für Kommunikationszwecke mit mindestens einem zweiten Nutzer zu verwenden. Das erfindungsgemäße System fungiert quasi als Mediator systemübergreifend zwischen verschiedenen Nutzern und verbindet existierende Ökosysteme miteinander.

Gemäß einer möglichen Ausgestaltung des erfindungsgemäßen Systems umfasst das System mindestens einen auf einem dem ersten Nutzer zugeordneten Endgerät installierten ersten Client und einen dem ersten Nutzer zugeordneten ersten System-Aggregator, der mit einem Signalisierungs-Server in kommunikativer Verbindung steht. Der auf dem Endgerät des ersten Nutzers installierte erste Client ist dazu konfiguriert, die Daten der digitalen Einheiten mittels Interaktion mit mindestens einem Sensor und/oder mindestens einem Aktor, die mit dem Endgerät in kommunikativer Verbindung stehen, zu erfassen, zu analysieren, zu bewerten, ggf. zu filtern und an den ersten System-Aggregator weiterzuleiten. Der erste System-Aggregator ist dazu konfiguriert, die von dem ersten Client empfangenen Daten entsprechend einer vorgegebenen hinterlegten Priorisierung der Daten in Abhängigkeit eines Beziehungsstatus zwischen dem ersten Nutzer und dem mindestens einen zweiten Nutzer auszuwählen und in ein von dem Signalisierungs-Server unterstütztes Format umzuwandeln. Der verwendete Signalisierungs-Server ist letztlich dazu konfiguriert, die entsprechend umgewandelten Daten an den mindestens einen zweiten Nutzer weiterzuleiten. Das bedeutet, dass durch eine Integration eines System-Clients, wie hier des ersten Clients, in ein jeweiliges Öko-System eine Anbindung des entsprechenden Öko-Systems an das erfindungsgemäße System insbesondere an einen System-Aggregator, hier den ersten System-Aggregator erfolgt. Ein Ziel dieser Datenübertragung ist es, dass der erste Nutzer mehr über sein persönliches Leben mit dem zweiten Nutzer teilen kann. Der erste Nutzer möchte Daten, die durch Sensoren und Services generiert werden, nutzen, um dem mindestens einen zweiten Nutzer seinen aktuellen Zustand automatisiert mitteilen zu können. Dabei kann der erste Nutzer sowohl als Sender als auch als Empfänger fungieren. Letzteres bedeutet, dass in Ausgestaltung der erste System-Aggregator weiterhin dazu konfiguriert ist, von dem Signalisierungs-Server Daten in den von dem Signalisierungs-Server unterstützten Format zu empfangen, umzuwandeln und regelbasiert an den ersten Client zur Weiterverarbeitung weiterzuleiten.

In weiterer Ausgestaltung umfasst das erfindungsgemäße System ferner mindestens einen auf einem dem mindestens einen zweiten Nutzer zugeordneten Endgerät installierten zweiten Client und mindestens einen dem mindestens einen zweiten Nutzer zugeordneten zweiten System-Aggregator. Dabei ist der mindestens eine zweite System-Aggregator dazu konfiguriert, Daten von dem Signalisierungs-Server in dem von dem Signalisierungs-Server unterstützten Format zu empfangen, umzuwandeln und regelbasiert an den mindestens einen zweiten Client zur Weiterverarbeitung weiterzuleiten. Dadurch ist es möglich, dass der erste Nutzer Daten nicht nur sendet, sondern diese Daten auch von dem mindestens einen zweiten Nutzer empfangen werden können. Das bedeutet, dass dadurch eine Vernetzung der jeweiligen "Auren" der Nutzer realisiert wird. Ist der jeweilige System-Aggregator des jeweiligen Nutzers dazu konfiguriert, von dem Signalisierungs-Server sowohl Daten in dem von dem Signalisierungs-Server unterstützten Format zu empfangen, umzuwandeln und regelbasiert an den jeweiligen Client zur Weiterverarbeitung weiterzuleiten als auch von dem jeweiligen Client empfangene Daten entsprechend einer vorgegebenen hinterlegten Priorisierung der Daten in Abhängigkeit eines Beziehungsstatus zwischen dem jeweiligen Nutzer und mindestens einem weiteren Nutzer auszuwählen und in ein von dem Signalisierungs-Server unterstützten Format umzuwandeln, ist es möglich, durch Kombination mehrerer derartiger System-Aggregatoren einen Austausch von Daten zwischen jeweiligen Nutzern zu realisieren. Das heißt, dass die jeweiligen Nutzer in die Lage versetzt werden, Daten, die sie selbst bzw. die die in ihrem Umfeld befindlichen digitalen Einheiten generieren, an andere Nutzer zu übertragen als auch Daten, die für den jeweiligen anderen Nutzer bzw. deren digitale Einheiten generiert werden, zu empfangen. Eine derartige Vernetzung jeweiliger System-Aggregatoren über mindestens einen Signalisierungs-Server ermöglicht eine Vernetzung der Auren der jeweiligen Nutzer untereinander bzw. den Austausch der darin jeweils generierten Daten.

Das erfindungsgemäße System, d. h. AURA, ist in Ausgestaltung hierarchisch aufgebaut, d. h. es umfasst einen sogenannten AURA-Kern und diesem untergeordnete AURA-Subkerne.

Die digitalen Einheiten können als Quellen für Kontextinfomationen IOT ("Internet of Things"-) und Applikationsplattformen nutzen. Anbietern dieser Plattformen werden durch den AURA-Kern APIs (application programming interfaces) bereitgestellt, so dass die Kontextinformationen in den AURA-Kern einfließen können. Der AURA-Kern stellt die AURA-Subkerne für Anbieter bereit, die AU-RA als Kommunikationskanal nutzen. In diesen AURA-Subkernen werden AU-RA-Funktionalitäten gekapselt. Die AURA-Subkerne sind damit eigenständige, voll funktionsfähige "AURA-Kerne", die in beliebige Öko-Systeme (z.B. I-OT/Application/Communication Plattformen) integriert werden können. Diese AURA-Subkerne verfügen über APIs, um eigenständig IOT- und Applikationsplattformen anschließen zu können. Sie werden damit zu einem eigenständigen AURA-Subkern, der beliebige Datenquellen einbinden kann. Ein Betreiber des AURA-Subkernes kann entscheiden, welche Daten er ausschließlich innerhalb eines so gebildeten Subkern-Moduls austauschen möchte und welche Daten mit dem übergeordneten AURA-Kern ausgetauscht werden. Per möglicher Standardeinstellung werden keine Kontextdaten mit dem AURA-Kern ausgetauscht.

Der AURA-Kern sorgt einerseits für technische Aktualisierungen jedes AURA-Subkerns. Andererseits können Betreiber eines jeweiligen AURA-Subkerns über den AURA-Kern Daten mit anderen Plattformen teilen, die nicht zum eigenen Ökos-System gehören. Der AURA-Kern kann diese Daten empfangen, analysieren, verwalten und gezielt an andere freigegebene AURA-Subkerne weitergeben. Dadurch werden verschiedene AURA-Subkerne miteinander verbunden. Diese so miteinander verbundenen AURA-Subkerne können über den AURA-Kern die erzeugten Kontextdaten miteinander austauschen.

Jeder AURA-Subkern verfügt über clientbasierte AURA-Kommunikationsmodule. Diese AURA-Kommunikationsmodule können in beliebige Applikationen, die zum Ökosystem eines AURA-Subkerns gehören, integriert werden. Die AURA-Kommunikationsmodule können untereinander einen AURA-Kommunikationskanal öffnen und von einem Nutzer zu mindestens einem anderen Nutzer kontextbasierte Kommunikation durchführen. Über den AURA-Kern und die AURA-Subkerne ist es möglich, dass Nutzer verschiedener Ökosysteme (Subkerne) durch die Nutzung der AURA-Kommunikationsmodule miteinander kommunizieren können.

In weiterer Ausgestaltung des erfindungsgemäßen Systems sind die genannten digitalen Einheiten entweder nutzereigene digitale Einheiten oder sie sind ausgewählt aus der Gruppe bestehend aus Zugangspunkten (z. B. Hotspots, Mobilfunkzellen) oder Beacons (z. B. iBeacons, Eddystones).

In weiterer Ausgestaltung des erfindungsgemäßen Systems ist ein Schichtmodell definiert und hinterlegt, gemäß welchem die zu übertragenden Daten zu klassifizieren, jeweiligen Schichten des Schichtmodells zuzuordnen und in Abhängigkeit mindestens einer Nutzervorgabe des ersten Nutzers an den mindestens einen zweiten Nutzer zu übertragen sind. Das genannte Schicht-Modell, im Folgenden auch Aura-Level-Modell genannt, ermöglicht eine Klassifizierung der im Umfeld eines jeweiligen Nutzers generierten Daten.

Das Schicht-Modell besteht in Ausgestaltung aus drei Schichten. Dabei handelt es sich um eine "Awareness-Schicht", eine "Information-Schicht" und eine "Interaction-Schicht". Eine jeweilige Informationsdichte von den jeweiligen Schichten zuzuordnenden Daten nimmt von der Awareness-Schicht über die Information-Schicht zu der Interaction-Schicht zu.

In einem ersten Schritt werden die auf Seiten des ersten Nutzers von in dessen Umfeld befindlichen Einheiten generierten Daten zuerst mindestens einem zweiten Nutzer über die Awareness-Schicht bereitgestellt. Dabei handelt es sich um weniger detaillierte Daten, die nur grundlegende Informationen bereitstellen. Ist der mindestens eine zweite Nutzer an weiteren Informationen interessiert, kann er diese von dem ersten Nutzer anfordern. Ist der erste Nutzer damit einverstanden, d. h. hat er dies im Vorfeld in einer Regel in dem erfindungsgemäßen System, d. h. in AURA, hinterlegt, so werden diese Daten automatisiert über die Information-Schicht an den mindestens einen zweiten Nutzer weitergeleitet. Diese der Information-Schicht zugeordneten Daten haben einen wesentlich höheren Informationsgehalt als die Daten der Awareness-Schicht. In einem letzten Schritt kann der mindestens eine zweite Nutzer die Interaction-Schicht nutzen, um eine direkte Interaktion basierend auf den aus der Interaction-Schicht empfangenen Daten aufzubauen. Sowohl der erste Nutzer als auch der mindestens eine zweite Nutzer haben dabei jeweils eine volle Kontrolle über alle ihre ein- und ausgehenden Daten. Der erste Nutzer kann im Vorfeld, d. h. bei Start bzw. Initialisierung des Systems, festlegen, welche Daten bzw. welche Art Daten, d. h. zu welcher der Schichten zugehörige Daten an den mindestens einen zweiten Nutzer weitergeleitet werden sollen. Der mindestens eine zweite Nutzer kann unabhängig davon bestimmen, ob er die Daten von dem ersten Nutzer überhaupt erhalten möchte.

Das bedeutet, dass sowohl der sendende Nutzer, d. h. der erste Nutzer, als auch der empfangende Nutzer, d. h. der zweite Nutzer, die Möglichkeit haben, zu hinterlegen, welche Daten sie, auf Seiten des ersten Nutzers, senden bzw., auf Seiten des zweiten Nutzers, empfangen wollen. Diese Vorgaben können von dem jeweiligen Nutzer unabhängig von dem entsprechend anderen Nutzer getätigt werden. All diese Einstellungen sind im Vorfeld zu tätigen, so dass bei Eintritt bzw. Erzeugung der jeweiligen Daten auf Seiten des sendenden Nutzers automatisiert von dem System nur die Daten an den empfangenden Nutzer übertragen werden, die von Seiten des sendenden Nutzers gesendet werden sollen und gleichzeitig von dem empfangenden Nutzer in Empfang genommen werden sollen. Dazu ist vorgesehen, dass bei der Übertragung mehrere Auswahl- und Filteraktivitäten der Daten vorzunehmen sind, die sukzessive genau die Daten herausfiltern, die sowohl gesendet als auch empfangen werden sollen.

In weiterer Ausgestaltung ist es denkbar, dass eine Übertragung der Daten wahlweise in Echtzeit, d. h. unmittelbar nach Erzeugung der jeweiligen Daten, oder als Historie im Nachgang erfolgt.

In weiterer Ausgestaltung des erfindungsgemäßen Systems umfasst der erste System-Aggregator, d. h. der jeweilige System-Aggregator auf Seiten des sendenden Nutzers, eine Regeleinheit, eine Verwaltungseinheit und eine Schnittstelleneinheit. Die Regeleinheit ist dabei dazu konfiguriert, aus- und eingehende Daten mit einem Regelmechanismus zwischen einem Maximum und einem Minimum zu regeln. Dieser Regelmechanismus ist in Ausgestaltung analog zu einem Lautstärken-Regler ausgestaltet und regelt die aus- und eingehenden Daten zwischen einem Maximum und einem Minimum. Das heißt, bei einem Maximum werden alle erzeugten Daten übertragen, bei einem Minimum keine Daten und bei einer Zwischeneinstellung entsprechend ein Teil der erzeugten Daten. Die Verwaltungseinheit ist dazu ausgelegt, eine Auswahl der ausgehenden Daten vorzunehmen. Die Schnittstelleneinheit ist dazu konfiguriert, die zu übertragenden Daten in das von dem jeweils genutzten Signalisierungs-Server unterstützte Format umzuwandeln. Ist der System-Aggregator auch dazu geeignet, umgekehrt Daten zu empfangen, so ist die darin umfasste Schnittstelleneinheit ferner dazu konfiguriert, vom Signalisierungs-Server empfangene Daten zu decodieren, so dass diese weiterverarbeitet werden können.

In weiterer Ausgestaltung umfasst der erste Client, d. h. der Client auf Seiten des sendenden Nutzers, mindestens einen Konnektor, in der Regel eine Mehrzahl von Konnektoren. Der mindestens eine Konnektor ist dazu konfiguriert, mindestens eine der folgenden Funktionen zu realisieren:
1. eine Interaktion mit in dem Endgerät verfügbaren internen Sensoren;
2. eine Interaktion mit in dem Endgerät verfügbaren internen Aktoren;
3. eine Interaktion mit außerhalb des Endgeräts befindlichen externen Sensoren;
4. eine Interaktion mit außerhalb des Endgeräts befindlichen externen Aktoren.

Die Aktoren dienen dazu, dass der Client mit einer Umgebung des Endgeräts, auf welchem der Client installiert ist, interagieren kann. Das heißt, die Konnektoren dienen dazu, Ereignisse und Zustände, die für die eigene Aura des jeweiligen Nutzers relevant sind, zu erfassen sowie Ereignisse und Zustände der Aura anderer Nutzer auszugeben und zu visualisieren. In weiterer Ausgestaltung kann der mindestens eine Konnektor während einer Laufzeit des ersten Clients aktiviert und deaktiviert sowie hinzugefügt oder entfernt werden. Verantwortlich für die Verwaltung eines Konnektor-Lebenszyklus ist eine ferner vorgesehene Konnektor-Verwaltungs-Komponente. Wie die einzelnen Konnektoren mit jeweiligen Sensoren und/oder Aktoren kommunizieren ist nicht spezifiziert und proprietär. Sensordaten, die entweder von internen Sensoren oder externen Sensoren gewonnen werden, werden von einer im ersten Client enthaltenen Analyse- und Verarbeitungskomponente erfasst, auf ihre Relevanz hin untersucht und bewertet, evtl. gefiltert und ggf. mittels einer im ersten Client enthaltenen Schnittstellenkomponente an den System-Aggregator weitergeleitet. Die Schnittstellenkomponente wandelt die Daten des jeweiligen Sensors in ein allgemeines AURA-Format um.

Der System-Aggregator realisiert Schnittstellen des eigenen Systems mit den jeweiligen Systemen anderer Nutzer. Jede dieser Schnittstellen bildet einen eigenen "Raum", in dem die Systeme bzw. Auren beider beteiligten Nutzer bi-direktional miteinander geteilt werden und interagieren können. Die Verwaltung bzw. das Management dieser einzelnen Raumbeziehungen ist eine Aufgabe des ferner in dem jeweiligen System-Aggregator enthaltenen Managers bzw. der jeweilig darin enthaltenen bereits genannten Verwaltungseinheit. Die Verwaltungseinheit ist auch dafür verantwortlich, ggf. eine weitere Filterung der ausgehenden Daten vorzunehmen, je nachdem, welche Daten der jeweils andere Nutzer abonniert hat und auch von Seiten des ersten Nutzers sehen darf.

Die Regeleinheit des System-Aggregators ermöglicht dem sendenden Nutzer, d. h. dem ersten Nutzer, das Regeln aller aus- und eingehenden Daten mit einer einfachen Interaktion, ähnlich einem Lautstärken-Regler im Radio. Das automatisierte erfindungsgemäße Senden von Daten kann so laut und leise geregelt werden. Entsprechend einer Priorisierung der Daten werden die niedrig priorisierten Daten zuerst ausgeblendet und die hochpriorisierten Daten zuletzt. Ist die Regeleinheit auf "0" geregelt, so werden alle ein- und ausgehenden Daten ausgeschaltet, d. h. weder gesendet noch empfangen.

Eine Aufgabe der Schnittstelleneinheit des System-Aggregators ist es, die vom Endgerät kommenden Daten in ein Format umzuwandeln, das dem verwendeten Signalisierungs-Server entspricht und somit eine Weiterleitung zum System-Aggregator des mindestens einen zweiten Nutzers ermöglicht. Für Daten, die vom Signalisierungs-Server empfangen werden, muss die Schnittstelleneinheit diese Nachricht in geeigneter Weise dekodieren und wieder in eigene Nachrichten umwandeln, so dass sie entsprechend von dem jeweiligen Client weiterverarbeitet werden können. Die Schnittstelleneinheit und der Signalisierungs-Server bilden somit eine logische Einheit. Soll bspw. ein anderer Signalisierungs-Server eingesetzt werden, muss entsprechend die Schnittstelleneinheit eines jeweiligen System-Aggregators angepasst werden.

Die vorliegende Erfindung betrifft ferner ein Verfahren zum Übertragen von Daten von einem ersten Nutzer zu mindestens einem zweiten Nutzer. Dabei werden die Daten von digitalten Einheiten, die von dem Nutzer in dessen unmittelbarer Umgebung genutzt werden, generiert. Die so generierten Daten werden automatisch regelbasiert gesammelt, gebündelt und über mindestens einen kontextbasierten Kommunikationskanal an den mindestens einen zweiten Nutzer übertragen.

In Ausgestaltung des erfindungsgemäßen Verfahrens wird auf einem dem ersten Nutzer zugeordneten Endgerät ein erster Client installiert und dem ersten Nutzer ein erster System-Aggregator zugeordnet. Der dem ersten Nutzer zugeordnete erste System-Aggregator steht in kommunikativer Verbindung mit einem Signalisierungs-Server. Der erste Client erfasst die Daten der digitalen Einheit mittels Interaktion mit mindestens einem Server und/oder mindestens einem Aktor, die mit dem Endgerät in kommunikativer Verbindung stehen. Ferner erfasst, bewertet und filtert der erste Client die so erfassten Daten und leitet sie an den ersten System-Aggregator weiter. Der erste System-Aggregator wählt die von dem ersten Client empfangenen Daten entsprechend einer vorgegebenen hinterlegten Priorisierung der Daten in Abhängigkeit eines Beziehungsstatus zwischen dem ersten Nutzer und dem mindestens einen zweiten Nutzer aus und wandelt sie in ein von dem Signalisierungs-Server unterstütztes Format um. Der Signalisierungs-Server leitet letztlich die entsprechend umgewandelten Daten an den mindestens einen zweiten Nutzer weiter.

In Ausgestaltung des erfindungsgemäßen Verfahrens ist vorgesehen, dass die Regeln, gemäß welchen die Daten gesammelt, gebündelt und übertragen werden, nutzerseitig im Vorfeld, d. h. nicht von Fall zu Fall, sondern während einer Initialisierungsphase des ersten Clients und des ersten System-Aggregators, festgelegt und mittels entsprechender Einstellungen hinterlegt werden. Die Regeln können jederzeit von dem jeweiligen Nutzer geändert und neu im System hinterlegt werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im folgenden unter Bezugnahme auf die Zeichnungen schematisch und ausführlich beschrieben.
Figur 1 zeigt in schematischer Darstellung ein Szenario zur Anwendung einer Ausführungsform des erfindungsgemäßen Systems.
Figur 2 zeigt in schematischer Darstellung eine Ausführungsform des erfindungsgemäßen Systems.
Figur 3 zeigt in schematischer Darstellung eine Ausführungsform eines erfindungsgemäß vorgesehenen Schichtmodells zur Klassifizierung von Kontextdaten eines Nutzers bei Ausführung einer Ausführungsform des erfindungsgemäßen Verfahrens.
Figur 4 zeigt ein Ablaufdiagramm einer Ausführungsform des erfindungsgemäßen Verfahrens.
Figur 5 zeigt ein Ablaufdiagramm einer weiteren Ausführungsform des erfindungsgemäßen Verfahrens.
Figur 6 zeigt ein Ablaufdiagramm einer noch weiteren Ausführungsform des erfindungsgemäßen Verfahrens.
Figur 7 zeigt in schematischer Darstellung eine weitere Ausführungsform des erfindungsgemäßen Systems.

Die Figuren werden zusammenhängend und übergreifend beschrieben.

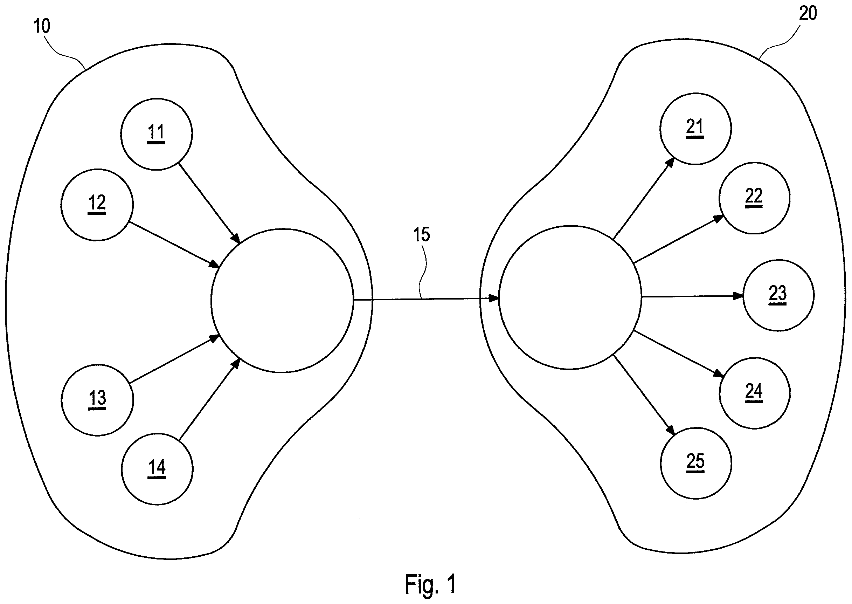

Figur 1 zeigt in schematischer Darstellung ein mögliches Szenario zur Anwendung einer Ausführungsform des erfindungsgemäßen Systems.

Gezeigt ist eine Aura bzw. eine digitale Aura 10 eines ersten Nutzers, welcher mit einem zweiten Nutzer und dessen digitaler Aura 20 in Kontakt treten möchte. Der Begriff "digitale Aura" beschreibt im Rahmen der vorliegenden Offenbarung alle digitalen Geräte und Services, die ein jeweiliger Nutzer zur Tages- und Nachtzeit in seinem unmittelbaren realen und virtuellen Umfeld nutzt. Dabei kann es sich um Sensoren und Aktoren auf technischen Geräten handeln, die der jeweilige Nutzer verwendet. Sensoren und Aktoren sind in diesem Falle technische Geräte, digitale Anwendungen und Services. In einem virtuellen Umfeld sind dies bspw. virtuelle Sensoren, Services und Anwendungen. Virtuelle Aktoren sind dabei Objekte und Services, die in der virtuellen Realität Änderungen in realen und virtuellen Kontexten der jeweiligen Kommunikationspartner, d. h. des ersten Nutzers bzw. des zweiten Nutzers, anzeigen.

Die digitale Aura 10 des ersten Nutzers umfasst dabei digitale Geräte 11 zur Kommunikation, "Internet der Dinge" 12 bezogen auf mögliche Aktivitäten wie Fahrradfahren, Fußballspielen, Spazierengehen oder Laufen, verschiedene Orte 13, in welchen sich der erste Nutzer aufhält oder zu welchen er sich hinbewegt, gewisse Dienste 14, wie Audio-Dienste, Fernsehen, virtuelle Realität etc., die der erste Nutzer verwendet oder zur Verfügung hat. Darüber hinaus verfügt der erste Nutzer über "SmartHome". Mit all diesen Quellen können Daten generiert werden und über Sensoren übermittelt werden und somit dem ersten Nutzer direkt zur Übertragung an den zweiten Nutzer bzw. an dessen Aura 20 zur Verfügung gestellt werden. Das bedeutet, dass die einzelnen Quellen von Daten über jeweilig spezifisch vorgesehene Sensoren einem auf einem Endgerät des ersten Nutzers installierten ersten Client die generierten Daten zur Verfügung stellen. Der Client sammelt diese Daten auf Basis von im Vorfeld durch den ersten Nutzer generierten Regeln, bündelt diese Daten entsprechend vorgegebener Regeln und stellt sie zu einer Übertragung an den zweiten Nutzer bereit. Durch einen hier nicht weiter dargestellten System-Aggregator, welcher dem ersten Nutzer zugeordnet ist, werden die zur Verfügung gestellten Daten gefiltert, ggf. in Abhängigkeit von dem Beziehungsstatus zwischen dem ersten Nutzer und dem zweiten Nutzer, und in ein von einem hier nicht dargestellten verwendeten Signalisierungs-Server unterstütztes Format umgewandelt. Der hier nicht dargestellte Signalisierungs-Server dient letztlich als Übermittlungsstation der Daten zwischen dem ersten Nutzer und dem zweiten Nutzer. Die Daten werden sodann von dem ersten Nutzer über einen kontextbasierten Kommunikationskanal 15 dem mindestens einen zweiten Nutzer bzw. dessen Aura 20 zur Verfügung gestellt bzw. an diesen übertragen. Der mindestens eine zweite Nutzer empfängt diese Daten von dem ersten Nutzer, analysiert diese Daten und verteilt sie auf geeignete Aktoren, die sich in der Aura 20 des zweiten Nutzers befinden, um die Daten in geeigneter Weise aufarbeiten und dem zweiten Nutzer zur Verfügung stellen, insbesondere darstellen zu können. Dazu dienen bspw. Aktoren, wie mobile Geräte 22, bspw. Smartphones, Wearables 23, wie bspw. digitale Uhren, SmartHome-Geräte 24, wie bspw. digitale Leuchtmittel, oder ein Kraftfahrzeug 25, wie bspw. Audio-Systeme, oder auch Objekte des Internet der Dinge 21, wie bspw. Roboter. Mittels dieser Beispiele an Aktoren können verschiedenste Kontextdaten, die von dem ersten Nutzer zu dem mindestens einen zweiten Nutzer übertragen werden, dem zweiten Nutzer angezeigt werden. Als Aktoren können alle Arten von bildschirmbasierten Systemen und alle Arten von Objekten des Internets der Dinge, die Änderungen eines Kontextstatus durch visuell, auditiv und sensitiv wahrnehmbare Änderungen am Objekt dem Nutzer mitteilen können, eingesetzt werden.

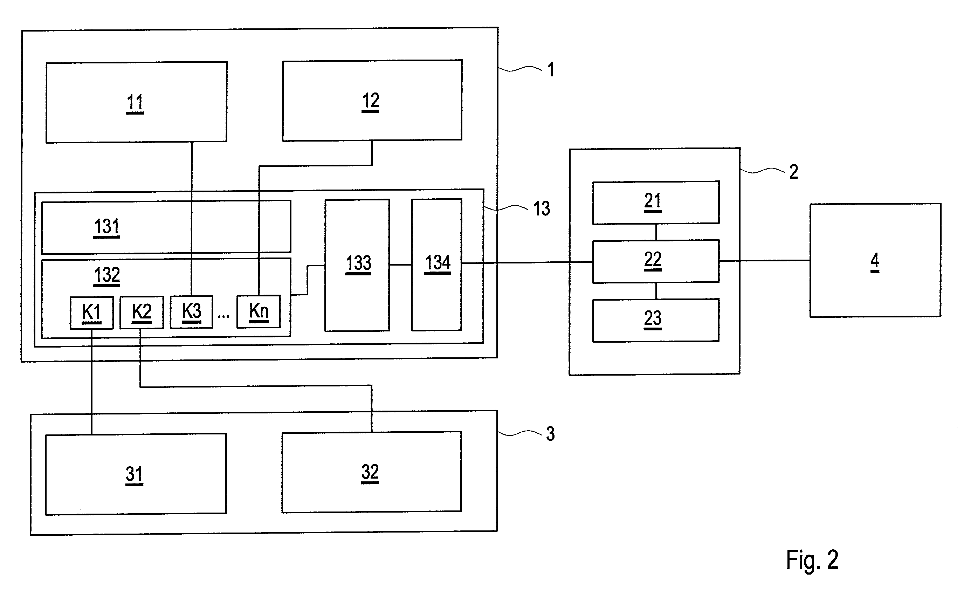

Figur 2 zeigt ein Blockdiagramm eines schematischen Aufbaus einer Ausführungsform des erfindungsgemäßen Systems. Im Kern des erfindungsgemäßen Systems steht ein Client 13, der auf einem Endgerät 1 installiert ist, welches mit einem ersten Nutzer des erfindungsgemäßen Systems assoziiert ist. Zur Interaktion mit der Umgebung des Endgeräts 1, d. h. zum Erfassen von Ereignissen und Zuständen, die für die eigene Aura dieses ersten Nutzers relevant sind sowie zur Ausgabe und Visualisierung von Ereignissen und Zuständen der Aura anderer Nutzer, können im Client 13 diverse Konnektoren 132 installiert und betrieben werden. Diese Konnektoren werden in Figur 2 mit K1, K2, K3, ... Kn bezeichnet. Diese Konnektoren dienen der Interaktion mit in dem Endgerät 1 verfügbaren internen Sensoren 11, z. B. zur Abfrage eines Akkustatus oder eines Status und Kontextes von aktuell laufenden Applikationen, wie bspw. Spotify. Ferner können diese Konnektoren dazu dienen, eine Interaktion mit in dem Endgerät 1 verfügbaren internen Aktoren 12 zu ermöglichen, z. B. über ein Display im Rahmen eines AURA-Frontends oder über einen Vibrationsalarm in mobilen Endgeräten. Ferner können diese Konnektoren dazu dienen, eine Interaktion mit außerhalb des Endgeräts 1 befindlichen externen Sensoren 31, wie bspw. einem Thermometer oder einem intelligenten Laufschuh zu realisieren. Darüber hinaus dienen diese Konnektoren einer Interaktion mit außerhalb des Endgeräts 1 befindlichen externen Aktoren 32, wie bspw. einem Farbwechsel einer Philips Hue Lampe. Die externen Sensoren 31 und die externen Aktoren 32 befinden sich in einem Umfeld 3 des ersten Nutzers, d. h. des sendenden Nutzers.

Konnektoren 132 können zur Laufzeit des Clients 13 aktiviert und deaktiviert als auch hinzugefügt bzw. entfernt werden. Verantwortlich für eine Verwaltung eines Konnektor-Lebenszyklus ist eine Konnektor-Management-Komponente 131. Wie die einzelnen Konnektoren 132 mit den jeweiligen Sensoren oder Aktoren kommunizieren, ist nicht spezifiziert und proprietär. Sensordaten, die entweder von internen Sensoren 11 oder von externen Sensoren 31 gewonnen wurden, werden von einer im Client 13 enthaltenen Analyse- und Verarbeitungskomponente 133 erfasst. Dort werden sie auf ihre Relevanz hin untersucht und bewertet, evtl. gefiltert und ggf. mittels einer im Client 13 enthaltenen Schnittstelleneinheit 134 an ein ferner mit dem ersten Nutzer verbundenen System-Aggregator 2 weitergeleitet. Die Schnittstellenkomponente 134 wandelt die Daten der Sensoren dabei in ein allgemeines AURA-Format um. Der System-Aggregator 2 realisiert Schnittstellen der eigenen Aura des ersten Nutzers mit Auren anderer Nutzer, um dadurch eine Übertragung von Daten des ersten Nutzers an mindestens einen zweiten Nutzer zu ermöglichen. Jede dieser Schnittstellen bildet einen eigenen Raum, in dem die Auren aller beteiligten Nutzer bi-direktional miteinander geteilt werden und interagieren können. Die Verwaltung dieser einzelnen Raumbeziehungen ist eine Aufgabe eines AURA-Managers 23, der Teil des System-Aggregators 2 ist. Der AURA-Manager 23 ist auch dafür verantwortlich, ggf. eine Filterung ausgehender Daten vorzunehmen, je nachdem welche Daten der jeweils andere, d. h. der mindestens eine zweite Nutzer abonniert hat und auch sehen darf. Ein ferner im System-Aggregator vorgesehener AURA-Regler 21 ermöglicht dem ersten Nutzer ein Regeln aller aus- und eingehenden Daten mit einer einfachen Interaktion, ähnlich einem Lautstärken-Regler an einem Radio. Ein automatisiertes Verwenden von Daten kann so laut und leise geregelt werden. Entsprechend einer Priorisierung von Daten werden die niedrig priorisierten Daten zuerst ausgeblendet und die hoch priorisierten Daten zuletzt. Am Ende werden alle ein- und ausgehenden Daten ausgeschaltet, wenn der Regler auf "0" gestellt ist.

Eine Aufgabe einer Schnittstellenkomponente 22, die ebenfalls Teil des System-Aggregators 2 ist, ist es, die vom Endgerät 1 kommenden Daten in ein Format umzuwandeln, das einem verwendeten Signalisierungs-Server 4 entspricht, und somit eine Weiterleitung zu einem System-Aggregator eines zweiten Nutzers ermöglicht. Für Daten, die vom Signalisierungs-Server 4 empfangen werden, muss die Schnittstellenkomponente 22 diese Daten in geeigneter Weise dekodieren und wieder in AURA-Daten umwandeln, so dass sie entsprechend von dem Client 13 weiterverarbeitet werden können. Die Komponenten 22 und 4 bilden somit eine logische Einheit. Soll bspw. ein anderer Signalisierungs-Server 4 eingesetzt werden, muss die Schnittstellenkomponente 22 entsprechend angepasst werden.

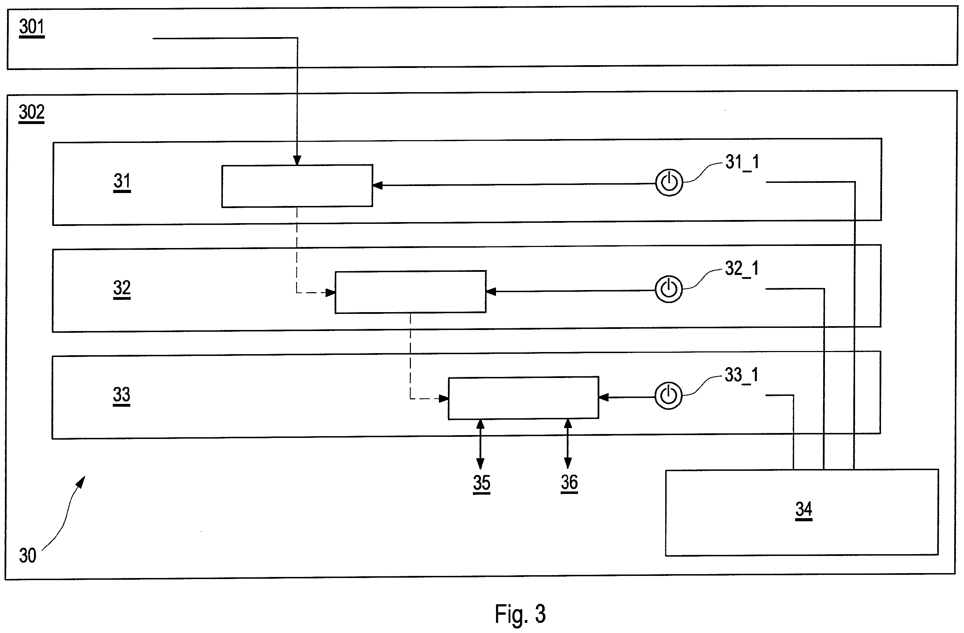

Figur 3 zeigt ein mögliches Schichtmodell 30, gemäß welchem Daten, die von Sensoren und Aktoren in einem Umfeld eines ersten Nutzers 301 generiert werden, klassifiziert werden können, um anhand dieser Klassifizierung eine Übertragung an mindestens einen zweiten Nutzer 302 auf Basis dieser Klassifizierung, die einer gegebenen Anforderung seitens des zweiten Nutzers 302 oder einer Regel seitens des sendendenden Nutzers 301 entspricht, vornehmen zu können. Das hier dargestellte Schichtmodell 30 zeigt drei verschiedene Schichten, nämlich eine Awareness-Schicht 31, eine Information-Schicht 32 und eine Interaction-Schicht 33. Daten, die von einem ersten Nutzer 301 an mindestens einen zweiten Nutzer 302 über die Awareness-Schicht 31 bereitgestellt werden, sind weniger detaillierte Daten, die nur grundlegende Informationen bereitstellen. Ist der mindestens eine zweite, empfangende Nutzer 302 an weiteren Informationen interessiert, kann er diese von dem ersten Nutzer 301 anfordern. Ist der erste Nutzer 301 einverstanden, werden diese automatisiert über die Information-Schicht 32 an den mindestens einen zweiten Nutzer weitergeleitet 302. Diese Daten haben einen wesentlich höheren Informationsgehalt als die Daten der Awareness-Schicht 31. In der letzten Schicht 33, nämlich der Interaction-Schicht, kann der mindestens eine zweite empfangende Nutzer 302 eine direkte Interaktion basierend auf den empfangenen Daten aufbauen.

Das bedeutet, dass je nach ausgewählter Schicht, die jeweils diesen Schichten 31, 32, 33 zugeordneten Daten mit entsprechenden Eigenschaften dem empfangenden Nutzer 302 in dessen digitaler Aura 34 bereitgestellt werden.

Zusätzlich kann der zweite Nutzer 302 auch über klassische Wege, wie Telefonie 35 oder über eine auf einem Endgerät zu installierende App 36, die es bspw. ermöglicht, Daten bspw. innerhalb einer Community auszutauschen, mit dem ersten Nutzer 301 interagieren.

Diese Übertragung bzw. Bereitstellung von Daten von dem ersten Nutzer 301 zu dem mindestens einen zweiten Nutzer 302 kann dabei in Echtzeit, d. h. unmittelbar nach Erzeugen der Daten in der Aura des ersten Nutzers 301 erfolgen.

Sowohl der erste Nutzer 301 als auch der mindestens eine zweite Nutzer 302 haben jeweils die volle Kontrolle über alle ihre ein- und ausgehenden Daten. Der erste Nutzer 301, d. h. der sendende Nutzer, kann festlegen, welche Daten an den mindestens einen zweiten Nutzer 302, d. h. den empfangenden Nutzer, weitergeleitet werden sollen und der empfangende Nutzer 302 kann ferner bestimmen, wie über die jeweilige Aktivierungssymbole 31_1, 32_1 bzw. 33_1 angedeutet, ob er die Daten von dem ersten Nutzer 301 überhaupt erhalten möchte.

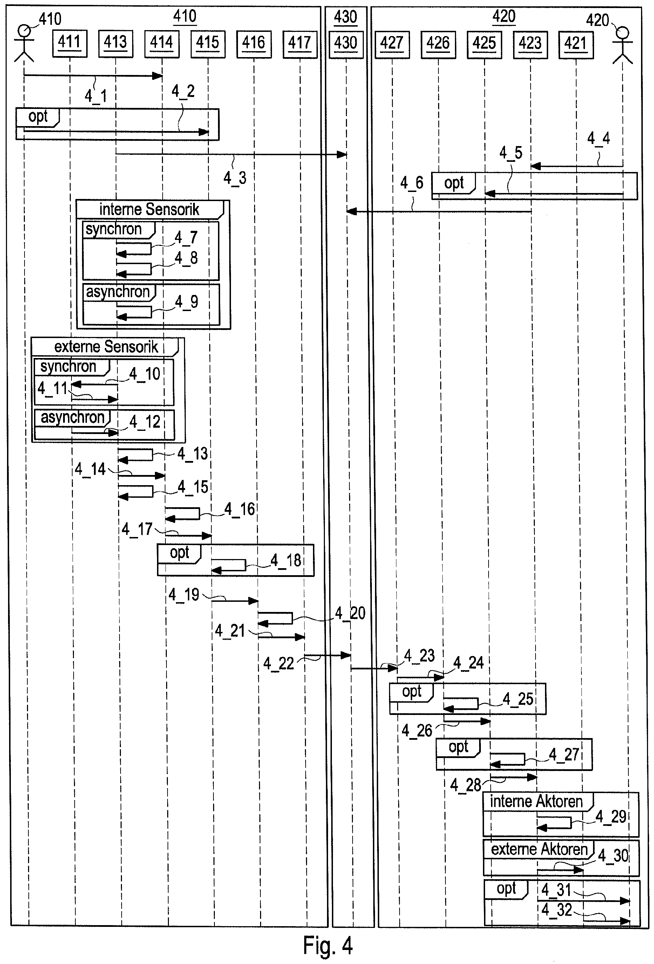

Figur 4 zeigt ein Ablaufdiagramm einer Übertragung von Daten, die einer Awareness-Schicht des voranstehend beschriebenen Schichtmodells zugeordnet sind, gemäß einer Ausführungsform des erfindungsgemäßen Verfahrens. Gezeigt ist ein erster Nutzer 410 und ein zweiter Nutzer 420. Ein jeweiliges Umfeld des jeweiligen Nutzers ist in den Figuren 4, 5 und 6 mit dem gleichen Bezugszeichen versehen wie der jeweilige Nutzer selbst. Im Umfeld 410 des ersten Nutzers 410 befindet sich eine externe Sensorik 411, die Daten zur Übertragung an den mindestens einen zweiten Nutzer 420 bereitstellen kann. Ferner ist dem ersten Nutzer 410 ein Client 413 zugeordnet, der in der Regel auf einem dem ersten Nutzer 410 zugeordneten Endgerät installiert ist. Ferner ist ein dem ersten Nutzer 410 zugeordneter System-Aggregator 414 dargestellt, der eine Regeleinheit 415, eine Verwaltungseinheit 416 sowie eine Schnittstelleneinheit 417 umfasst. Auf Seiten des mindestens einen zweiten Nutzers 420 ist ebenfalls eine Schnittstelleneinheit 427, eine Verwaltungseinheit 426 und eine Regeleinheit 425 dargestellt, die Teile eines hier nicht dargestellten System-Aggregators sind. Ferner ist dem mindestens einen zweiten Nutzer 420 ein zweiter Client 423 zugeordnet. Dieser zweite Client 423 ist in der Regel auch auf einem dem mindestens einen zweiten Nutzer zugeordneten Endgerät implementiert. Im Umfeld 420 des zweiten Nutzers befinden sich ferner externe Aktoren 421, die dazu dienen, die von dem ersten Nutzer 410 empfangenen Daten dem zweiten Nutzer 420 darzustellen.

Die Schritte 4_1 bis 4_6 in Figur 4 zeigen, wie die jeweiligen Nutzer 410 bzw. 420 ihre jeweiligen Clients 413 bzw. 423 starten und anmelden und eine Konfiguration eines ihnen zugeordneten Reglers 415 bzw. 425 vornehmen. Diese Schritte stellen lediglich eine Start- und Initialisierungsphase des erfindungsgemäßen Systems, d. h. von AURA dar. In der folgenden Beschreibung wird darüber hinaus davon ausgegangen, dass der erste Nutzer 410 bereits mindestens Konnektoren für je einen internen und einen externen Sensor in seinem ihm zugeordneten Client 413 integriert hat.

Schritte 4_7 und 4_8 zeigen eine synchrone, d. h. vom Client 413 getriggerte Abfrage von Daten eines internen Sensors. Dies kann im einfachsten Fall z. B. ein Akkustatus eines jeweiligen Endgeräts sein. Diese Daten werden in Schritt 4_7 aktiv abgefragt, d. h. es handelt sich hier um einen "Pull-Modus", und ggf. in Schritt 4_8 vorverarbeitet und für eine Weiterverarbeitung gesichert.

Schritt 4_9 zeigt einen alternativen Fall, dass der Client 413 über einen entsprechenden Konnektor Daten von einem internen Sensor asynchron, d. h. ohne aktive Initiierung einer Anfrage, zugesandt bekommt, d. h. es handelt sich hierbei um einen sogenannten "Push-Modus".

Schritte 4_10 und 4_11 zeigen in Analogie zu den Schritten 4_7 und 4_8 eine aktive Abfrage von Daten eines externen Sensors im "Pull-Modus".

Schritt 4_12 zeigt in Analogie zu Schritt 4_9 ein Empfangen von Daten eines externen Sensors im "Push-Modus".

In Schritt 4_13 werden Daten, die in den vorigen Schritten von internen oder externen Sensoren erfasst wurden, einer ersten Schwellwert-Analyse unterzogen. Für eine derartige Schwellwert-Analyse werden die jeweiligen Konnektoren involviert, da nur diese Konnektoren das für diese Evaluierung notwendige, sensor-spezifische Wissen haben. Als Beispiel kann hier ein Sensorwert eines Akku-Status dienen, dessen Änderungen um einzelne Prozentwerte eher irrelevant sind. Bei Erreichen eines speziellen Grenzwerts jedoch wird dieser Sensorstatus sehr relevant und wird somit Bestandteil der Aura des jeweiligen Nutzers, hier des ersten Nutzers 410, den er mit dem mindestens einen zweiten Nutzer 420 teilen möchte.

Schritt 4_14 zeigt eine Umwandlung eines erfassten Sensorwerts nach erfolgter Schwellwertfilterung in einen AURA-Kontext, d. h. in ein zur Übertragung zur Verfügung zu stellendes Datum.

In Schritt 4_15 wird der aktuelle Sensorstatus als Referenzwert für künftige Schwellwert- oder Differenzwertanalysen im jeweiligen Konnektor gesichert.

Der Kontext bzw. die diesem Kontext zugeordneten Daten erreicht bzw. erreichen in Schritt 4_16 den System-Aggregator. Dort erfolgt eine Analyse und Klassifizierung des Kontextes bzw. der Daten zu einer der drei Schichten des vorab in Figur 3 beschriebenen Drei-Schicht-Modells. Darüber hinaus erhält die Nachricht anhand einer personalisierten Einstellung des Clients 413 eine Priorität zugeordnet. Da es sich in diesem Anwendungsfall um die Awareness-Schicht handelt, wird in Schritt 4_17 eine resultierende Awareness-Nachricht an die Regeleinheit weitergeleitet. Die Regeleinheit 415 filtert in Schritt 4_17 die erhaltene Awareness-Nachricht anhand ihrer Priorität und des vom Nutzer 410 eingestellten Regler-Levels. Lässt die Regeleinheit 415 die Awareness-Nachricht passieren, wird diese in Schritt 4_19 an die Verwaltungseinheit 416 weitergeleitet. Die Verwaltungseinheit 416 verwaltet die Beziehung des aktuellen Nutzers 410 zu anderen Nutzern, wie bspw. zu Nutzer 420. In Schritt 4_20 wird nunmehr entschieden, zu welchen der externen Nutzer 420 diese Awareness-Nachricht weitergeleitet werden soll. Schritt 4_21 zeigt ein Übermitteln dieser Nachricht an die Schnittstelleneinheit 417, die die Nachricht in ein für das jeweilige Signalisierungs-Backend bzw. den Signalisierungs-Server 430 passendes Format verpackt und in Schritt 4_22 an dieses weitergeleitet. In Schritt 4_23 erfolgt ein Routing dieser verpackten Awareness-Nachricht an die Schnittstelleneinheit 427 auf dem Endgerät des zweiten Nutzers 420. Dort wird die Nachricht in Schritt 4_24 aus dem Transportformat wieder in eine AURA-Nachricht entpackt und an die Verwaltungseinheit 426 des zweiten Nutzers 420 übermittelt. In der Verwaltungseinheit 426 des zweiten Nutzers 420 wird in Schritt 4_25 eine Validität der Awareness-Nachricht überprüft und ggf. anhand eines Beziehungsstatus mit dem sendenden Nutzer, hier dem ersten Nutzer 410 schon eine potentielle Filterung anhand des Nachrichtenlevels vorgenommen. Die passierenden Nachrichten werden in Schritt 4_26 an die Regeleinheit 425 des zweiten Nutzers 420 weitergeleitet. Dort erfolgt in Schritt 4_27 eine Filterung der AURA-Nachricht anhand ihrer Schicht bzw. ihres Levels, Awareness in diesem Fall, ihrer Priorität und eines aktuell von Nutzer 420 eingestellten Regler-Levels. Passiert die Nachricht die Regeleinheit 425, erreicht sie über Schritt 4_28 den Client 423 von Nutzer 420. Der Client 423 benutzt in den Schritten 4_29 und 4_30 entweder interne Aktoren, wie bspw. ein Display des Endgeräts oder externe Aktoren 421, wie bspw. Philips Hue, zur Visualisierung der Awareness-Nachricht von Nutzer 410, die von Nutzer 420 in den Schritten 4_31 und 4_32 wahrgenommen wird.

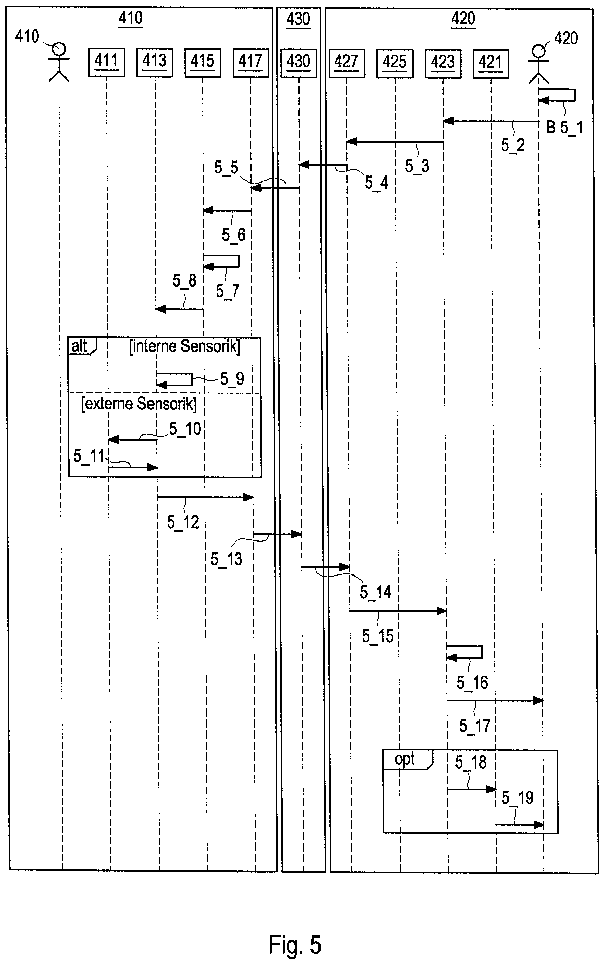

Figur 5 zeigt ein Ablaufdiagramm zur Übermittlung von Daten, die einer Information-Schicht gemäß des anhand von Figur 3 vorgestellten Drei-Schicht-Modells zugeordnet sind. Die Nutzer bzw. deren jeweiliges Umfeld 410 und 420 umfassen die gleichen Komponenten wie in Figur 4, welche in Figur 5 mit den gleichen Bezugszeichen benannt sind.

Die Datenmengen für einen kontinuierlichen Austausch einer Awareness-Nachricht sind sehr klein und nur dazu gedacht, grundlegende Zustandsinformationen über einen Nutzer transportieren und visualisieren zu lassen, selbst dann noch, wenn die Nutzer nur zeitweise und sehr schmalbandig mit Netzwerk-Ressourcen ausgestattet sind. Bestimmte Änderungen im Status eines entfernten Nutzers können beim lokalen Nutzer den Wunsch erzeugen, mehr über den aktuellen Status zu erfahren. Damit geht die Kommunikation vom bisherigen nicht-interaktiven Awareness-Level in das sogenannte Information-Level über. Figur 5 zeigt den grundlegenden Ablauf einer solchen Informations-anfrage durch Nutzer 420 bei Nutzer 410. Nutzer 420 auf der rechten Seite hat eine bestimmte Awareness-Nachricht von Nutzer 410 wahrgenommen und möchte mehr darüber erfahren. Ein Beispiel dafür wäre eine Nachricht, dass Nutzer 410 aktuell Musik, bspw. über Spotify, hört. Nutzer 420 möchte nun in Schritt 5_1 erfahren, um welche Musik es sich dabei handelt. Über seinen Client 423 wird in Schritt 5_2 diese Informationsanfrage von Nutzer 420 erstellt und in Schritt 5_3 an seine Schnittstelleneinheit 427 übergeben. Die Schnittstelleneinheit 427 von Nutzer 420 verpackt die Informationsanfrage in ein für das jeweilige Signalisierungs-Backend 430 passende Format, das sogenannte Transportformat, und übermittelt in Schritt 5_4 die verpackte Anfrage an den Signalisierungs-Server 430. In Schritt 5_5 erfolgt ein Routing dieser verpackten Informationsanfrage an die Schnittstelleneinheit 417 auf dem Endgerät des Nutzers 410. Dort wird diese Anfrage aus dem Transportformat wieder in eine AURA-Nachricht entpackt und in Schritt 5_6 an die Regeleinheit 415 von Nutzer 410 übermittelt. Die Regeleinheit 415 nimmt in Schritt 5_7 eine Bewertung potentieller Filterungen der Informationsanfrage vor. Wenn die Anfrage passieren darf, wird sie in Schritt 5_8 an den Client 413 von Nutzer 410 weitergeleitet. Der Client 413 analysiert die Informationsanfrage und holt in Schritt 5_9 die erforderlichen Informationen von dem entsprechenden internen Sensor oder in den Schritten 5_10 und 5_11 vom externen Sensor 411 ein. Die angefragten Informationen werden in Schritt 5_12 als AURA-Nachricht an die AURA-Schnittstellenkomponente 417 von Nutzer 410 übermittelt, dort in Schritt 5_13 in das für das jeweilige Signalisierungs-Backend 430 passende Format verpackt und in Schritt 5_14 an die Schnittstelleneinheit 427 auf dem Endgerät von Nutzer 420 weitergeleitet. Dort wird in Schritt 5_15 die AURA-Informationsnachricht aus dem Transportformat entpackt und an den Client 423 von Nutzer 420 gesandt. In Schritt 5_16 wird die angeforderte Information auf einen im Client 423 integrierten Aktor, wie bspw. einem internen Display, visualisiert.

Schritt 5_18 zeigt alternativ oder zusätzlich eine Visualisierung der angeforderten Informationen auf einem externen Aktor 421, wie bspw. einem externen Display. Schritte 5_16 und 5_18 schließen einander nicht aus. Die Informationen können gleichzeitig auf mehreren internen und externen Aktoren visualisiert werden. Schritte 5_17 und 5_19 zeigen eine Wahrnehmung der angeforderten Informationen durch den Nutzer 420.

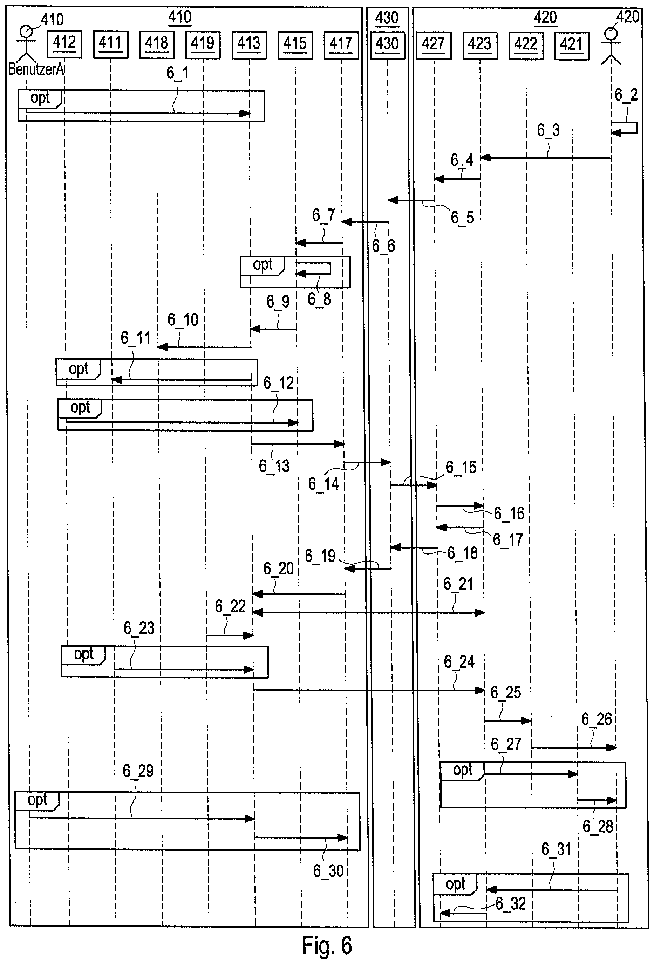

Figur 6 zeigt ein Ablaufdiagramm für Daten, die dem Interaktions-Level bzw. der Interaktions-Schicht des anhand von Figur 3 vorgestellten Drei-Schicht-Modells zugeordnet wurde. Ebenso wie in Figur 5 sind die Komponenten der Nutzer 410 und 420 analog zu Figur 4 bezeichnet und mit den gleichen Bezugszeichen versehen.

Auf Basis der in der Informations-Schicht erhaltenen Detailinformationen über einen aktuellen Status des entfernten Nutzers 410 kann der lokale Nutzer 420 Interesse daran haben, interaktiv an der Aura des Nutzers 410 teilzuhaben, also z. B. einen aktuellen Song mit ihm zu hören oder ein aktuelles Kamerabild von Nutzer 410 mitzuerleben.

Figur 6 zeigt Schritte zum Etablieren einer Kommunikation auf einem Interaktions-Level bzw. in der Interaktions-Schicht.

In Schritt 6_1 wird dargestellt, dass der Nutzer 410 optional alle von Nutzer 420 ankommenden Interaktionsanfragen automatisch authentisieren und akzeptieren kann. Dies ist eine sicherheitsrelevante Einstellung, die eine Privatsphäre eines Nutzers kompromittieren kann. Alternativ kann eine Authentisierung auch direkt bei Eintreffen einer einzelnen Interaktionsanfrage vom empfangenen Nutzer eingefordert werden, wie in Schritten 6_11 und 6_12 dargestellt.

Über den Client 423 von Nutzer 420 wird in den Schritten 6_2 und 6_3 eine Interaktions-Anfrage erstellt und in Schritt 6_4 an eine Schnittstellenkomponente 427 von Nutzer 420 übergeben. Die Schnittstellenkomponente 427 verpackt die Anfrage in ein für das jeweilige Signalisierungs-Backend 430 passendes Format, nämlich ein sogenanntes Transportformat und übermittelt in Schritt 6_5 die verpackte Anfrage an den Signalisierungs-Server 430.

In Schritt 6_6 erfolgt ein Routing dieser verpackten Interaktions-Anfrage an die Schnittstelleneinheit 417 auf dem Endgerät des Nutzers 410. Dort wird diese Anfrage in Schritt 6_7 aus dem Transportformat wieder in eine AURA-Nachricht verpackt und an die Regeleinheit 415 von Nutzer 410 übermittelt.

Die Regeleinheit 415 kann entsprechend ihres aktuell eingestellten Regler-Levels die Anfrage passieren lassen oder auch unterdrücken, wie durch Schritt 6_8 dargestellt.

Hat die Informations-Anfrage die Regeleinheit 415 passiert, erreicht sie in Schritt 6_9 den Client. Dort wird sie in Schritt 6_10 entweder auf internen Aktuatoren 418 oder in Schritt 6_11 auf externen Aktuatoren 412 visualisiert.

Wenn nicht schon in Schritt 6_1 erfolgt, muss jetzt in Schritt 6_12 eine Authentisierung der angefragten Interaktion durch Nutzer 410 erfolgen. Die Schritte 6_10 bis 6_20 zeigen in stark vereinfachter Form einen Austausch von Daten, die zur Etablierung eines Medien- bzw. Kommunikationskanals, bspw. basierend auf WebRTC, notwendig sind. Involviert in einen derartigen Prozess sind die Schnittstellenkomponenten 417, 427 beider Endgeräte, d. h. des Endgeräts von Nutzer 410 als auch des Endgeräts von Nutzer 420 sowie das Signalisierungs-Backend 430 zum Routen dieser Nachrichten zwischen Nutzer 410 und Nutzer 420. In Schritt 6_21 ist ein Medien- bzw. Kommunikationskanal zwischen beiden Clients 413, 423 aufgebaut. Die Schritte 6_22 und 6_23 zeigen eine Integration von internen oder externen Sensoren, um Daten zur Weiterleitung in den geöffneten Kommunikationskanal zu erfassen. Die Daten aus Schritten 6_22 oder 6_23 werden in Schritt 6_24 über einen etablierten Kommunikationskanal von Nutzer 410 an Nutzer 420 übertragen und dort in Schritt 6_25 und optional auch in Schritt 6_27 durch externe Aktoren visualisiert und in Schritten 6_26 und 6_28 von Nutzer 420 konsumiert.

Die Schritte 6_29 bis 6_32 zeigen eine Beendigung der Interaktion der beiden Nutzer. Zu diesem Zweck werden entsprechende Signalisierungsnachrichten erzeugt und analog zu den in Schritten 6_13 bis 6_20 dargestellten Schritten zwischen beiden Clients ausgetauscht, woraufhin der Kommunikationskanal abgebaut wird.

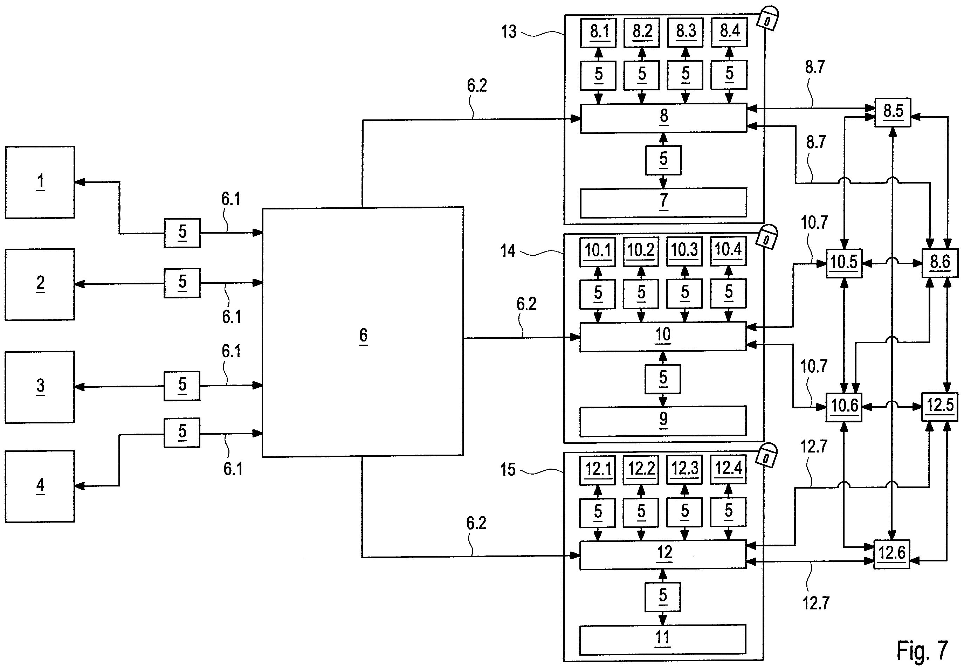

Figur 7 zeigt in schematischer Darstellung eine weitere mögliche Ausführungsform des erfindungsgemäßen Systems, d. h. von AURA. In dieser hier dargestellten Ausführungsform ist das erfindungsgemäße System hierarchisch aufgebaut, d. h. es umfasst einen sogenannten AURA-Kern 6 und diesem zugeordnete bzw. untergeordnete AURA-Subkerne 8, 10 und 12. Der AURA-Kern 6 stellt eine Vielzahl von Schnittstellen 5, d. h. APIs, bereit, über welche Anbieter anderer Plattformen Kontextinformationen zu dem AURA-Kern 6 übermitteln können. Bei den Anbietern anderer Plattformen kann es sich bspw. um Open Source-Plattformen 4, wie bspw. Android, oder um Business-to-Business-Clouds 3 oder um Partner-Clouds 2, bspw. Spotify, oder um eine Plattform für das Internet der Dinge 1, wie bspw. über T-Systems handeln. Die jeweiligen Anbieter können über die bereitgestellten Schnittstellen 5 über eine jeweilige Verbindung 6.1 zu dem AURA-Kern 6 Kontextinformationen übermitteln. Die ferner mit dem AURA-Kern 6 verbundenen Subkerne 8, 10 und 12 kommunizieren mit dem AURA-Kern 6 mittels Kommunikationsverbindungen 6.2. Jeder der Subkerne 8, 10 und 12 ist hier in einem jeweiligen geschlossenen Ökosystem 13, 14 bzw. 15 eingebunden, das wiederum eine eigenständige interne Struktur besitzt. In den jeweiligen AURA-Subkernen 8, 10 und 12 werden AURA-Funktionalitäten gekapselt. Somit sind die AURA-Subkerne 8, 10 und 12 eigenständige und voll funktionsfähige AURA-Kerne, die in beliebige Ökosysteme, bspw. IOT/Applikations- oder Kommunikationsplattformen integriert werden können. Jeder dieser AURA-Subkerne 8, 10 und 12 verfügt wieder über eigene Schnittstellen bzw. APIs 5, um eigenständig IOT/Applikationsplattformen anschließen zu können. Somit werden die jeweiligen AURA-Subkerne 8, 10 und 12 zu eigenständigen Einheiten, die beliebige Datenquellen einbinden können. Die jeweiligen Subkerne 8, 10 und 12 stellen im vorliegenden Beispiel bspw. jeweilige AURA-Subkerne für Social Media/Community/Telekommunikation/Messaging-Plattformen dar und umfassen jeweils mehrere IOT/Applikationsplattformen 8.1, 8.2, 8.3. 8.4 bzw. 10.1, 10.2, 10.3, 10.4 bzw. 12.1, 12.2, 12.3, 12.4, über welche sie über eine jeweilige API 5 Kontextinformationen erhalten können. Die AURA-Subkerne 8, 10 und 12 kommunizieren wiederum über eine weitere Schnittstelle 5 mit entsprechend jeweiligen Plattformen 7, 9 bzw. 11. Bei den in einem jeweiligen geschlossenen Ökosystem 13, 14, 15 integrierten Plattformen 7, 9, 11 kann es sich bspw. um Telekom FMC (Fixed Mobile Convergence), RCS (Revision Control System) oder um OTT (Over-the-top content) handeln. Jeder Subkern 8, 10 bzw. 12 ist somit in ein in sich geschlossenes Ökosystem eingebunden, kann jedoch ferner über eine Verbindung zum AURA-Kern 6 auch von den weiteren Plattformen 1, 2, 3 und 4 Kontextinformationen erhalten. Ferner kann ein jeweiliger AURA-Client 8.5 und 8.6 bzw. 10.5 und 10.6 bzw. 12.5 und 12.6 über eine jeweilige weitere Verbindung 8.7 bzw. 10.7 bzw. 12.7 Informationen von dem jeweiligen Subkern 8, 10 und 12 sowie auch letztlich über den jeweiligen Subkern 8, 10 und 12 und den Kern 6 von den verschiedenen Plattformen 1, 2, 3 und 4 erhalten.

Ferner sind Kommunikationskanäle zwischen den jeweiligen AURA-Clients vorhanden, über welche die verschiedenen AURA-Clients 8.5, 8.6 bzw. 10.5, 10.6 bzw. 12.5 und 12.6 Daten untereinander austauschen können. Über den AU-RA-Kern 6 und die AURA-Subkerne 8, 10, 12 ist es möglich, dass Nutzer verschiedener Ökosysteme durch die Nutzung der AURA-Kommunikationsmodule miteinander kommunizieren bzw. Kontextinformationen automatisch austauschen bzw. übermitteln können.

## Patentansprüche

1. System zum Übertragen von Kontextdaten über einen aktuellen Kontext, in dem sich ein erster Nutzer aktuell befindet, von dem ersten Nutzer (410) zu mindestens einem zweiten Nutzer (420), wobei die Kontextdaten von digitalen Einheiten, die von dem ersten Nutzer (410) in dessen unmittelbarer realer und/oder virtueller Umgebung genutzt werden, generiert werden und wobei das System dazu konfiguriert ist, die so generierten Kontextdaten regelbasiert automatisch zu sammeln, in dem aktuellen Kontext zu kombinieren und über einen kontextbasierten Kommunikationskanal (15) an den mindestens einen zweiten Nutzer (420) zu übertragen, wobei in einer Start- und Initialisierungsphase des Systems nutzerseitig definiert wird und Regeln festgelegt werden, wie Kontextdaten, die durch Nutzung der digitalen Einheiten in der unmittelbaren Umgebung des ersten Nutzers erzeugt werden, dem mindestens einen zweiten Nutzer zu übertragen sind, wobei die Regeln jederzeit von dem ersten Nutzer geändert und neu im System hinterlegbar sind, und wobei die von dem ersten Nutzer in seiner realen und/oder virtuellen Umgebung genutzten digitalen Einheiten technische Geräte, digitale Anwendungen und virtuelle Sensoren umfassen und wobei das System mindestens einen auf einem dem ersten Nutzer zugeordneten Endgerät installierten ersten Client (13, 413), einen dem ersten Nutzer (410) zugeordneten ersten System-Aggregator (2, 414), und einen Signalisierungs-Server (4, 430) der in kommunikativer Verbindung mit dem ersten System-Aggregator steht, umfasst, wobei der erste Client (13, 413) dazu konfiguriert ist, die Kontextdaten der digitalen Einheiten mittels Interaktion mit mindestens einem Sensor und/oder mindestens einem Aktor, die mit dem Endgerät in kommunikativer Verbindung stehen, zu erfassen, zu analysieren, zu bewerten, gegebenenfalls zu filtern und an den ersten System-Aggregator (2, 414) weiterzuleiten, und der erste System-Aggregator (2, 414) dazu konfiguriert ist, die von dem ersten Client (13, 413) empfangenen Kontextdaten entsprechend einer vorgegebenen hinterlegten Priorisierung der Kontextdaten in Abhängigkeit eines Beziehungsstatus zwischen dem ersten Nutzer (410) und dem mindestens einen zweiten Nutzer (420) auszuwählen und in ein von dem Signalisierungs-Server (4, 430) unterstütztes Format umzuwandeln, und der Signalisierungs-Server (4, 430) dazu konfiguriert ist, die entsprechend umgewandelten Kontextdaten an den mindestens einen zweiten Nutzer (420) weiterzuleiten.

2. System nach Anspruch 1, das ferner dazu konfiguriert ist, die generierten Kontextdaten an den mindestens einen zweiten Nutzer unabhängig davon, ob der mindestens eine zweite Nutzer eine die Kontextdaten erzeugende Applikation ebenfalls auf einem dem mindestens einen zweiten Nutzer zugeordneten Endgerät installiert hat, zu übermitteln.

3. System nach Anspruch 1 oder 2, das ferner mindestens einen auf einem dem mindestens einen zweiten Nutzer (420) zugeordneten Endgerät installierten zweiten Client (423) und mindestens einen dem mindestens einen zweiten Nutzer (420) zugeordneten zweiten System-Aggregator umfasst, wobei der mindestens eine zweite System-Aggregator dazu konfiguriert ist, von dem Signalisierungs-Server (4, 430) Kontextdaten in dem von dem Signalisierungs-Server (4, 430) unterstützten Format zu empfangen, umzuwandeln und regelbasiert an den mindestens einen zweiten Client (13, 423) zur Weiterverarbeitung weiterzuleiten, wobei der mindestens eine zweite Nutzer (420) hinterlegen kann, welche Kontextdaten er von dem ersten Nutzer (410) empfangen will, wobei bei der Übertragung mehrere Auswahl- und Filteraktivitäten der Kontextdaten vorzunehmen sind, die sukzessive genau die Kontextdaten herausfiltern, die sowohl gesendet als auch empfangen werden sollen.

4. System nach Anspruch 3, das ferner dazu konfiguriert ist, mittels eines zeitlich unbestimmten und von dem mindestens einen zweiten Nutzer zu setzenden Markers, der ausgelöst wird, sobald sich der aktuelle Kontext des ersten Nutzers ändert, dem mindestens einen zweiten Nutzer den Kontextwechsel mitzuteilen.

5. System nach einem der voranstehenden Ansprüche, bei dem der erste System-Aggregator (2, 414) weiterhin dazu konfiguriert ist, von dem Signalisierungs-Server (4, 430) Kontextdaten in dem von dem Signalisierungs-Server (4, 430) unterstützten Format zu empfangen, umzuwandeln und regelbasiert an den ersten Client (13, 410) zur Weiterverarbeitung weiterzuleiten.

6. System nach einem der voranstehenden Ansprüche, bei dem die digitalen Einheiten ausgewählt sind aus der Gruppe bestehend aus öffentlichen Hotspots, iBeacons.

7. System nach einem der voranstehenden Ansprüche, bei dem ein Schicht-Modell (30) definiert und hinterlegt ist, gemäß welchem die Kontextdaten zu klassifizieren, jeweiligen Schichten (31, 32, 33) des Schicht-Modells (30) zuzuordnen und in Abhängigkeit mindestens einer Nutzervorgabe des ersten Nutzers (410) an den mindestens einen zweiten Nutzer (420) zu übertragen sind.

8. System nach Anspruch 7, bei dem das Schicht-Modell (30) in eine Awareness-Schicht (31), eine Information-Schicht (32) und eine Interaction-Schicht (33) unterteilt ist, wobei eine jeweilige Informationsdichte von den jeweiligen Schichten zuzuordnenden Kontextdaten von der Awareness-Schicht (31) über die Informations-Schicht (32) bis zur Interaction-Schicht (33) zunimmt.

9. System nach einem der voranstehenden Ansprüche, bei dem die Übertragung der Kontextdaten wahlweise in Echtzeit bzw. unmittelbar nach Erzeugung der Kontextdaten oder als Historie im Nachgang erfolgt.

10. System nach einem der voranstehenden Ansprüche, bei dem der erste System-Aggregator (2, 44) eine Regeleinheit (21), eine Verwaltungseinheit (23) und eine Schnittstelleneinheit (22) umfasst, wobei die Regeleinheit (21) dazu konfiguriert ist, aus- und eingehende Kontextdaten mit einem Regelmechanismus zwischen einem Maximum und einem Minimum zu regeln, die Verwaltungseinheit (23) dazu ausgelegt ist, eine Auswahl der ausgehenden Kontextdaten vorzunehmen und die Schnittstelleneinheit (22) dazu konfiguriert ist, die zu übertragenden Kontextdaten in das von dem Signalisierungs-Server (4, 430) unterstützte Format umzuwandeln.

11. System nach einem der voranstehenden Ansprüche, bei dem der erste Client (13, 413) mindestens einen Konnektor (132) umfasst, der dazu konfiguriert ist, mindestens eine der folgenden Funktionen zu realisieren:
eine Interaktion mit in dem Endgerät (1) verfügbaren internen Sensoren;
eine Interaktion mit in dem Endgerät (1) verfügbaren internen Aktoren;
eine Interaktion mit außerhalb des Endgeräts (1) befindlichen externen Sensoren;
eine Interaktion mit außerhalb des Endgeräts (1) befindlichen externen Aktoren.

12. System nach Anspruch 11, bei dem der mindestens eine Konnektor (132) während einer Laufzeit des ersten Clients (13, 413) aktiviert, deaktiviert, hinzugefügt und/oder entfernt werden kann.

13. Verfahren zum Übertragen von Kontextdaten über einen aktuellen Kontext, in dem sich ein erster Nutzer aktuell befindet, von dem ersten Nutzer (410) zu einem zweiten Nutzer, wobei die Kontextdaten von digitalen Einheiten, die von dem ersten Nutzer in dessen unmittelbarer realer und/oder virtueller Umgebung genutzt werden, generiert werden und wobei die so generierten Kontextdaten regelbasiert automatisch gesammelt, in dem aktuellen Kontext kombiniert und über einen kontextbasierten Kommunikationskanal an den mindestens einen zweiten Nutzer übertragen werden, wobei in einer Start- und Initialisierungsphase des Systems nutzerseitig definiert wird, wie Kontextdaten, die durch Nutzung der digitalen Einheiten in der unmittelbaren Umgebung des ersten Nutzers erzeugt werden, dem mindestens einen zweiten Nutzer übertragen werden, wobei die Regeln jederzeit von dem ersten Nutzer geändert und neu im System hinterlegt werden können, und wobei auf einem dem ersten Nutzer zugeordneten Endgerät ein erster Client (13) installiert und dem ersten Nutzer ein erster System-Aggregator (2) zugeordnet wird, der mit einem Signalisierungs-Server (4) in kommunikativer Verbindung steht, wobei der erste Client (13) die Kontextdaten der digitalen Einheiten mittels Interaktion mit mindestens einem Sensor und/oder mindestens einem Aktor, die mit dem Endgerät in kommunikativer Verbindung stehen, erfasst, analysiert, bewertet, filtert und an den ersten System-Aggregator (2) weiterleitet, und der erste System-Aggregator die von dem ersten Client (13) empfangenen Kontextdaten entsprechend einer vorgegebenen hinterlegten Priorisierung der Kontextdaten in Abhängigkeit eines Beziehungsstatus zwischen dem ersten Nutzer und dem mindestens einen zweiten Nutzer auswählt und in ein von dem Signalisierungs-Server (4) unterstütztes Format umwandelt, und der Signalisierungs-Server (4) die entsprechend umgewandelten Kontextdaten an den mindestens einen zweiten Nutzer weiterleitet.

14. Verfahren nach Anspruch 13, bei dem die Regeln, gemäß welchen die Kontextdaten gesammelt, gebündelt und übertragen werden, nutzerseitig im Vorfeld festgelegt und mittels entsprechender Einstellungen hinterlegt werden.

## Claims

1. A system for transmitting context data about a current context in which a first user is currently located from the first user (410) to at least one second user (420), the context data being generated by digital units which are used by the first user (410) in his immediate real and/or virtual environment, and wherein the system is configured to automatically collect the thus generated context data in accordance with rules, combine them in the current context and transmit them via a context-based communication channel (15) to the at least one second user (420), wherein, during a start and initialization phase of the system, the user side defines and sets rules, how context data, which are generated by using the digital units in the immediate environment of the first user, are to be transmitted to the at least one second user, wherein the rules can be changed at any time by the first user and can be stored anew in the system, and wherein the digital units used by the first user in his real and/or virtual environment comprise technical devices, digital applications and virtual sensors, and wherein the system comprises at least one first client (13, 413) installed on a terminal assigned to the first user, a first system aggregator (2, 414) assigned to the first user (410), and a signaling server (4, 430) in communicative communication with the first system aggregator, wherein the first client (13, 413) is configured to acquire, analyze, evaluate, if necessary filter and forward to the first system aggregator (2, 414) the context data of the digital units by means of interaction with at least one sensor and/or at least one actuator which are in communicative connection with the terminal, and the first system aggregator (2, 414) is configured to select the context data received from the first client (13, 413) in accordance with a predetermined stored prioritization of the context data, depending on a relationship status between the first user (410) and the at least one second user (420), and to convert them into a format supported by the signaling server (4, 430), and the signaling server (4, 430) is configured to forward the correspondingly converted context data to the at least one second user (420).

2. The system according to claim 1, which is further configured to transmit the generated context data to the at least one second user irrespective of whether the at least one second user has also installed an application generating the context data on a terminal assigned to the at least one second user.

3. The system according to claim 1 or 2, further comprising at least one second client (423) installed on a terminal assigned to the at least one second user (420) and at least one second system aggregator assigned to the at least one second user (420), wherein the at least one second system aggregator is configured to receive context data from the signaling server (4, 430) in the format supported by the signaling server (4, 430), to convert them and to forward them in accordance with the rules to the at least one second client (13, 423) for further processing, wherein the at least one second user (420) can store which context data he wishes to receive from the first user (410), wherein, during transmission, a plurality of selection and filtering activities on the context data is to be performed which successively filter out exactly the context data which are both to be sent and received.

4. The system according to claim 3, which is further configured to notify the at least one second user of the context change by means of a marker which is indefinite in time and is to be set by the at least one second user and which is triggered as soon as the current context of the first user changes.

5. The system according to one of the foregoing claims, wherein the first system aggregator (2, 414) is further configured to receive context data from the signaling server (4, 430) in the format supported by the signaling server (4, 430), convert them and forward them in accordance with the rules to the first client (13, 410) for further processing.

6. The system according to one of the foregoing claims, wherein the digital units are selected from the group consisting of public hotspots, iBeacons.

7. The system according to one of the foregoing claims, wherein a layer model (30) is defined and stored, according to which the context data are to be classified, assigned to respective layers (31, 32, 33) of the layer model (30) and transmitted to the at least one second user (420), depending on at least one user specification of the first user (410).

8. A system according to claim 7, wherein the layer model (30) is divided into an awareness layer (31), an information layer (32) and an interaction layer (33), wherein a respective information density of context data to be assigned to the respective layers increases from the awareness layer (31) to the information layer (32) to the interaction layer (33).

9. The system according to one of the foregoing claims, wherein the transmission of context data takes place either in real time or immediately after generation of the context data or as a history at a later time.

10. The system according to one of the foregoing claims, wherein the first system aggregator (2, 44) comprises a control unit (21), a management unit (23) and an interface unit (22), wherein the control unit (21) is configured to control outgoing and incoming context data with a control mechanism between a maximum and a minimum, the management unit (23) is adapted to make a selection from the outgoing context data and the interface unit (22) is configured to convert the context data to be transmitted into the format supported by the signaling server (4, 430).

11. The system according to one of the foregoing claims, wherein the first client (13, 413) comprises at least one connector (132) configured to realize at least one of the following functions:
an interaction with internal sensors available inside the terminal (1);
an interaction with internal actuators available inside the terminal (1);
an interaction with external sensors located outside the terminal (1);
an interaction with external actuators located outside the terminal (1).

12. The system according to claim 11, wherein the at least one connector (132) can be activated, deactivated, added and/or removed during a runtime of the first client (13, 413).

13. A method for transmitting context data about a current context in which a first user is currently located from the first user (410) to a second user, the context data being generated by digital units which are used by the first user in his immediate real and/or virtual environment, and wherein the thus generated context data are automatically collected, combined in the current context and transmitted via a context-based communication channel to the at least one second user in accordance with rules, wherein, during a start and initialization phase of the system, the user side defines, how context data, which are generated by using the digital units in the immediate environment of the first user, are transmitted to the at least one second user, wherein the rules can be changed at any time by the first user and can be stored anew in the system, and wherein a first client (13) is installed on a terminal assigned to the first user and a first system aggregator (2) which is in communicative communication with a signaling server (4) is assigned to the first user, wherein the first client (13) acquires, analyzes, evaluates, filters and forwards to the first system aggregator (2) the context data of the digital units by means of interaction with at least one sensor and/or at least one actuator which are in communicative connection with the terminal, and the first system aggregator selects the context data received from the first client (13) in accordance with a predetermined stored prioritization of the context data, depending on a relationship status between the first user and the at least one second user, and converts them into a format supported by the signaling server (4), and the signaling server (4) forwards the correspondingly converted context data to the at least one second user.

14. The method according to claim 13, wherein the rules according to which the context data are collected, bundled and transmitted are defined in advance by the user and stored by means of corresponding settings.

## Revendications

1. Système pour transmettre des données de contexte sur un contexte actuel dans lequel un premier utilisateur est actuellement situé, du premier utilisateur (410) à au moins un second utilisateur (420), les données de contexte étant générées par des unités numériques qui sont utilisées par le premier utilisateur (410) dans son environnement immédiat réel et/ou virtuel, et le système étant configuré pour collecter automatiquement les données de contexte ainsi générées conformément à des règles, les combiner dans le contexte actuel et les transmettre à travers un canal de communication basée sur le contexte (15) à au moins un second utilisateur (420), l'utilisateur, pendant une phase de démarrage et d'initialisation du système, définissant et fixant les règles comment les données de contexte générées par utilisation des unités numériques dans l'environnement immédiat du premier utilisateur, doivent être transmises à au moins un second utilisateur, les règles pouvant être modifiées par le premier utilisateur à tout moment et pouvant être stockées à nouveau dans le système, et les unités numériques utilisées par le premier utilisateur dans l'environnement réel et/ou virtuel comprenant des dispositifs techniques, des applications numériques et des capteurs virtuels, et le système comprenant au moins un premier client (13, 413) installée sur un terminal attribué au premier utilisateur, un premier agrégateur de système (2, 414) attribué au premier utilisateur (410), et un serveur de signalisation (4, 430) en communication avec le premier agrégateur de système, le premier client (13, 413) étant configuré pour acquérir, analyser, évaluer, si nécessaire filtrer et transférer au premier agrégateur de système (2, 414) les données de contexte des unités numériques par interaction avec au moins un capteur et/ou au moins un actionneur qui sont en communication avec le terminal, et le premier agrégateur de système (2, 414) étant configuré pour sélectionner les données de contexte reçues du premier client (13, 413) en fonction d'une priorisation stockée prédéterminée des données de contexte, selon un statut de relation entre le premier utilisateur (410) et au moins un second utilisateur (420), et les convertir dans un format supporté par le serveur de signalisation (4, 430), et le serveur de signalisation (4, 430) étant configuré pour transférer les données de contexte converties correspondantes à au moins un second utilisateur (420).

2. Système selon la revendication 1, en outre configuré pour transmettre les données de contexte générées à au moins un second utilisateur indépendamment du fait qu'au moins un second utilisateur a également installé ou non une application générant les données de contexte sur un terminal attribué à au moins un second utilisateur.

3. Système selon la revendication 1 ou 2, comprenant en outre au moins un second client (423) installé sur un terminal attribué à au moins un second utilisateur (420) et au moins un second agrégateur de système attribué à au moins un second utilisateur (420), au moins un second agrégateur de système étant configuré pour recevoir des données de contexte provenant du serveur de signalisation (4, 430) dans le format supporté par le serveur de signalisation (4, 430), les convertir et les transférer conformément aux règles à au moins un second client (13, 423) pour traitement ultérieur, au moins un second utilisateur (420) pouvant stocker quelles données de contexte il souhaite recevoir du premier utilisateur (410), une pluralité d'activités de sélection et de filtrage sur le contexte de données devant être exécutées pendant la transmission, pour filtrer successivement exactement les données de contexte qui doivent à la fois être envoyées et reçues.

4. Système selon la revendication 3, en outre configuré pour notifier au moins un second utilisateur du changement de contexte au moyen d'un marqueur qui est indéfini dans le temps et doit être fixé par le au moins un second utilisateur, et qui est déclenché dès que le contexte actuel du premier utilisateur change.

5. Système selon l'une des revendications précédentes, le premier agrégateur de système (2, 414) étant en outre configuré pour recevoir les données de contexte du serveur de signalisation (4, 430) dans le format supporté par le serveur de signalisation (4, 430), les convertir et les transférer au premier client conformément aux règles (13, 410) pour un traitement ultérieur.

6. Système selon l'une des revendications précédentes, les unités numériques étant sélectionnées dans le groupe composé de points d'accès publics, d'iBeacons.

7. Système selon l'une des revendications précédentes, un modèle de couche (30) étant défini et stocké, selon lequel les données de contexte doivent être classées, attribuées aux couches respectives (31, 32, 33) du modèle de couche (30) et transmises à au moins un second utilisateur (420), selon au moins une spécification d'utilisateur du premier utilisateur (410).

8. Système selon la revendication 7, le modèle de couche (30) étant divisé en une couche de sensibilisation (31), une couche d'information (32) et une couche d'interaction (33), la densité d'information respective des données de contexte à attribuer aux couches respectives augmente à partir de la couche de sensibilisation (31) à la couche d'interaction (33) en passant par la couche d'information (32).

9. Système selon l'une des revendications précédentes, la transmission des données de contexte s'effectuant soit en temps réel ou immédiatement après la génération des données de contexte ou en tant qu'historique à un moment ultérieur.

10. Système selon l'une des revendications précédentes, le premier agrégateur de système (2, 44) comprenant une unité de commande (21), une unité de gestion (23) et une unité d'interface (22), l'unité de commande (21) étant configurée pour contrôler les données de contexte sortantes et entrantes, à l'aide d'un mécanisme de commande, entre un minimum et un maximum, l'unité de gestion (23) étant adaptée pour effectuer une sélection des données de contexte sortantes et l'unité d'interface (22) étant configurée pour convertir les données de contexte devant être transmises, dans le format supporté par le serveur de signalisation (4, 430).

11. Système selon l'une des revendications précédentes, le premier client (13, 413) comprenant au moins un connecteur (132) configuré pour réaliser au moins une des fonctions suivantes :
une interaction avec les capteurs internes disponibles à l'intérieur du terminal (1);
une interaction avec les actionneurs internes disponibles à l'intérieur du terminal (1);
une interaction avec des capteurs externes situés à l'extérieur du terminal (1);
une interaction avec les actionneurs externes situés à l'intérieur du terminal (1).

12. Système selon la revendication 11, au moins un connecteur (132) pouvant être activé, désactivé, ajouté et/ou supprimé pendant une exécution du premier client (13, 413).

13. Procédé pour transmettre des données de contexte sur un contexte actuel dans lequel se trouve actuellement un premier utilisateur, du premier utilisateur (410) à un second utilisateur, les données de contexte étant générées par les unités numériques qui sont utilisées par le premier utilisateur dans son environnement immédiat réel et/ou virtuel, et les données de contexte ainsi générées étant collectées automatiquement, combinées dans le contexte actuel et transmises par un canal de communication basée sur le contexte à au moins un second utilisateur conformément aux règles, l'utilisateur définissant, pendant une phase de démarrage et d'initialisation du système, comment les données de contexte, qui sont générées par utilisation des unités numériques dans l'environnement immédiat du premier utilisateur, sont transmises à au moins un second utilisateur, les règles pouvant être changées et être stockées à nouveau par le premier utilisateur dans le système à tout moment, et un premier client (13) étant installé sur un terminal attribué au premier utilisateur et un premier agrégateur de système (2) qui est en communication avec un serveur de signalisation (4) est attribué au premier au premier utilisateur, le premier client (13) acquérant, analysant, évaluant, filtrant et transférant au premier agrégateur de système (2) les données de contexte des unités numériques par interaction avec au moins un capteur et/ou au moins un actionneur qui sont en communication avec le terminal, et le premier agrégateur de système sélectionnant les données de contexte reçues du premier client (13) en fonction d'une priorisation stockée prédéterminée des données de contexte, selon un statut de relation entre le premier utilisateur et au moins un second utilisateur, et les convertissant dans un format supporté par le serveur de signalisation (4), et le serveur de signalisation (4) transférant les données de contexte converties correspondantes à au moins un second utilisateur (420).

14. Procédé selon la revendication 13, les règles selon lequelles les données de contexte sont recueillies, groupées et transmises étant définies à l'avance par l'utilisateur et stockées par le moyen des paramètres correspondants.
